# EUROPEAN PATENT APPLICATION

(11) **EP 2 149 982 A1**
(43) Date of publication of application: **03.02.2010**
(21) Application number: 08740175.8
(22) Date of filing: 10.04.2008
(51) Int. Cl.: H02P 29/00, G06F 19/00

(54) **DEVICE FOR SELECTING MOTOR CONTROLLER, METHOD FOR SELECTING MOTOR CONTROLLER, COMPUTER PROGRAM IMPLEMENTING THAT METHOD, AND ITS STORAGE METHOD**

(30) Priority: 15.05.2007 JP 2007129142
(71) Applicant: Kabushiki Kaisha Yaskawa Denki, Kitakyushu-shi, Fukuoka 806-0004 (JP)
(72) Inventor: The designation of the inventor has not yet been filed
(74) Representative: Gendron, Vincent Christian
(86) International application number: PCT/JP2008/057074
(87) International publication number: WO 2008/139800

(57) **Abstract**

A motor control device selecting apparatus and a motor control device selecting method capable of combining transmission mechanism elements serially or parallely, storing the combination of the transmission mechanism elements as a subsystem model, utilizing the stored subsystem models by combining them as transmission mechanism elements, and building many layers of subsystem models, and a computer program having the function and a storage medium are provided.

The motor control device selecting apparatus includes an input unit (7), an output unit (8), a selection operation unit (9), a characteristic database of a motor control device (15), an option combination database (16), a subsystem storage unit (34), a mechanism condition input unit (21), a command condition input unit (22), a specification condition input unit of a motor control device (24), a mechanism condition block input unit (33), and a selection result recording unit (40).

## Description

### Technical Field

The present invention relates to a motor control device selecting apparatus, a motor control device selecting method, a computer program for realizing the method, and a storage medium of the computer program, each being for selecting a suitable motor control device on the basis of use conditions and a characteristic database. The use conditions include combinations of various configurations of loaded machines which the motor drives, and external forces. The use conditions further include drive patterns of the motor. The characteristic database includes the characteristics of a motor control device composed of a motor and a controller which are used for a positioning device of semiconductor manufacturing equipment, a machine tool, and the like, or an industrial robot.

### Background Art

A conventional motor capacity selection method includes a step of setting a desired driving pattern by combining elements and inputting data into mechanical elements, and a step of selecting a motor series from a database saved in selection software beforehand and executing the selection software to display judgment result, in order to provide a method by which a motor capacity optimal for the driving pattern which a customer desires can be selected and peripheral information can be obtained at a time. The conventional method makes it possible to save a new mechanical element, which a customer has designed uniquely, in downloaded selection software in addition to the mechanical elements included in the selection software as standard equipment at the time of combining the mechanical elements at the above-mentioned step (see, for example, Patent Document 1).
Moreover, a conventional servomotor selecting method does not consider the correlation between motor rotation speeds and output torque, and consequently has the following problems: an output shortage becomes clear after the method has been applied to a real machine; and because an option of a brake is selected and the adaptability of the option to a selected motor is judged after the selection of the motor in an operation of selecting a servomotor with a brake, it is needed to perform a recalculation in consideration of the inertia moment of the brake. Accordingly, it is required to consider a rotation speed-torque characteristic at the time of judging the adaptability between motor operation conditions and a motor specification table.
Moreover, there is the related art of giving the inertia moment for an option of a brake at the time of inputting machine specifications to eliminate the recalculation of selection (see, for example, Patent Document 2).

Moreover, there is a conventional simulation system which builds a virtual mechanical model of a mechanical device and operates the virtual mechanical model on the basis of a simulation calculation according to the input data from an embedded software execution device. The conventional simulation system provides first and second processing units to a virtual mechanical model simulation device for enabling the virtual mechanical model to operate in real time by simulation calculations without needing any synchronization waiting in the embedded software. The first processing unit executes input and output against the embedded software execution device and the mechanical operations of the virtual mechanical model. The second processing unit executes rendering processing of the virtual mechanical model by using a spare time of the first processing unit (see, for example, Patent Document 3).
[Patent Document 1] Japanese Patent Application Laid-Open Publication No. 2006-260350 (FIG. 1)
[Patent Document 2] Japanese Patent Application Laid-Open Publication No. 2006-42589 (FIGS. 2, 3, and 4)
[Patent Document 3] Japanese Patent Application Laid-Open Publication No. 2003-30251 (FIG. 1)

The motor capacity selection method, which is a first conventional example and is disclosed in Patent Document 1, will be described.

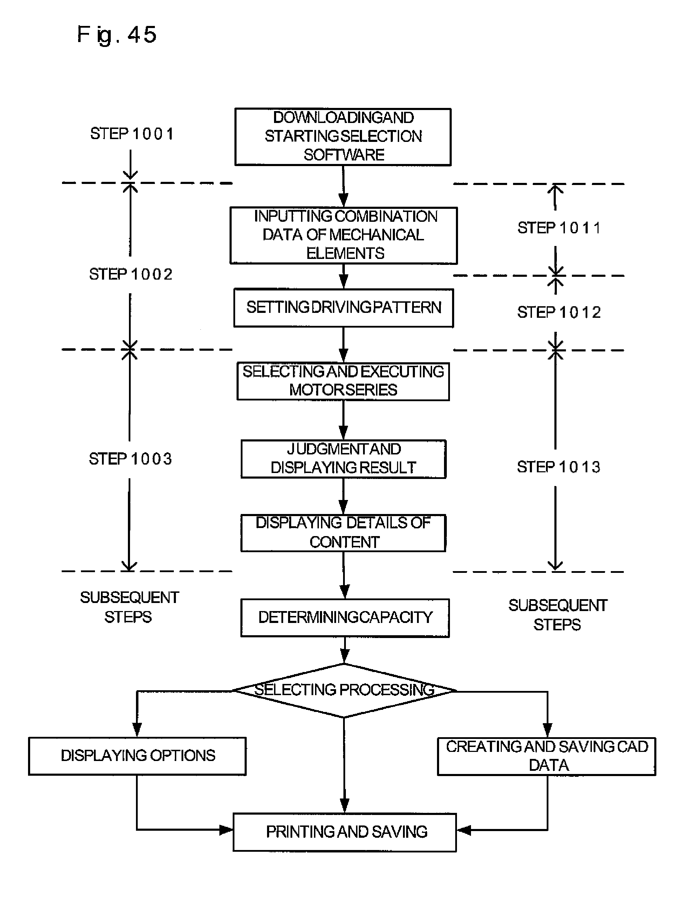

FIG. 45 is a flow chart of the motor capacity selection method, which is the first conventional example and is disclosed in Patent Document 1. In FIG. 45, Step 1001 is the downloading and starting of selection software; Step 1002 is the inputting of combination data of mechanical elements at Step 1011 and the setting of an driving pattern at Step 1012; Step 1003 is the selecting and executing of a motor series, the judgment and displaying of the result, the displaying of the details of contents, which are the same contents as those at Step 1013. The subsequent steps branch off to the displaying of options and the creating and saving of computer-aided design (CAD) data by selecting processing and reach printing and saving.
At Step 1001, selection software is downloaded to a personal computer to enable the selection software to be utilizable. At Step 1002, a customer calls the mechanical elements included in the selection software as standard equipment and constitutes a mechanical block by arbitrarily combining the called mechanical elements. The present selection software enables the customer to freely design a mechanical element which the customer desires and to save the designed mechanical element in another place (for example, a place displayed as another tab) as a designed new mechanical element.
The new mechanical element is composed of an "image," an "individual input item," and a "formula" similarly to a standard mechanical element, and can be used at the time of calling later to constitute a new mechanical block.
Thereby the customer can constitute a desired driving pattern without being limited to the combinations composed of only the standard mechanical elements.

A part of the mechanical elements which the selection software includes as standard equipment is as follows. As the mechanisms for transforming a rotational motion into a linear motion, there are a ball screw/a nut, a belt conveyor, a pinion/a rack, and the like, and a horizontal mechanism and a vertical mechanism can be selected by the attachment direction of the mechanism. As the mechanisms for transforming a rotational motion into another rotational motion, there are a coupling, a speed reducer, a gear, a timing belt, and the like. As rotating loads, there are an inertia load, an eccentric columnar inertia, a rotating external force, a rotating friction element, and the like. Then, if a mechanical block of the desired driving pattern is determined, then the customer inputs each mechanical element specification and the driving pattern to each mechanical element, and a set of the desired driving pattern is completed.
At Step 1003, the user selects a motor series from the database saved in the selection software beforehand in consideration of the function, performance, the resolution of an encoder, and the like. When the user clicks a judgment button after the selection, an operation of the selection software is executed, and the judgment result is displayed.
In the display of the judgment result at Step 1003, margins of safety ratios (e.g., ○ (circle) indicates 2 times or more, Δ (triangle) indicates 1 time to 1.5 times, X (cross) indicates 1 time or less) are displayed on the basis of the comparison of either of the effective torque and running torque of the driving pattern, each calculated by the selection software, and the rated torque of all the motors which satisfy the instantaneous maximum torque among the selected series, respectively. This display enables the selection in consideration of the safety factors. At this time, as a matter of course, it is necessary to set the margin of safety ratio to 1 or more.
When the motor capacity has been decided by the examination of the display of the judgment results, the part number of the servo amplifier corresponding to the part number of the decided servomotor is displayed. When a combination of the part number of the servomotor and the part number of the servo amplifier is decided, subsequent selecting processing can be performed. For example, displaying options, and saving and printing of CAD data and the like can be used.
Incidentally, the method can deal with two formats of CAD data (two-dimensional CAD data and three-dimensional CAD data), and the method enables the selection of the extensions of files to be saved (the extensions are *.dwg and the like as the two-dimensional CAD, *.stp and *.sat and the like as three-dimensional CAD, and *.dxf, *.jpg, *.bmp, *.tif, *.mi, *.xml, and the like as common extensions of the two-dimensional CAD and the three-dimensional CAD).

The servomotor selecting method, which is the second conventional example and is disclosed in Patent Document 2, will be described.

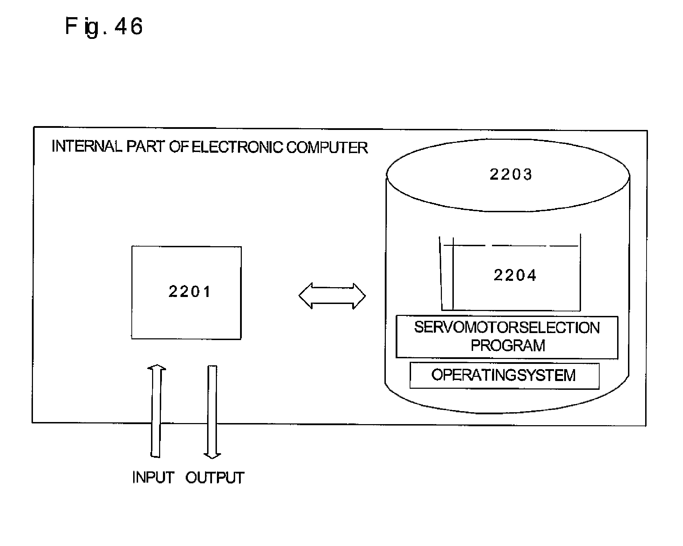

FIG. 46 is a configuration diagram showing the internal configuration of an electronic computer, which is the servomotor selecting apparatus of the second conventional example disclosed in Patent Document 2. The electronic computer is composed of an operation unit 2201 and a storage unit 2203. The storage unit 2203 stores a servomotor selection program main body, a servomotor specification table 2204, and an operating system therein.

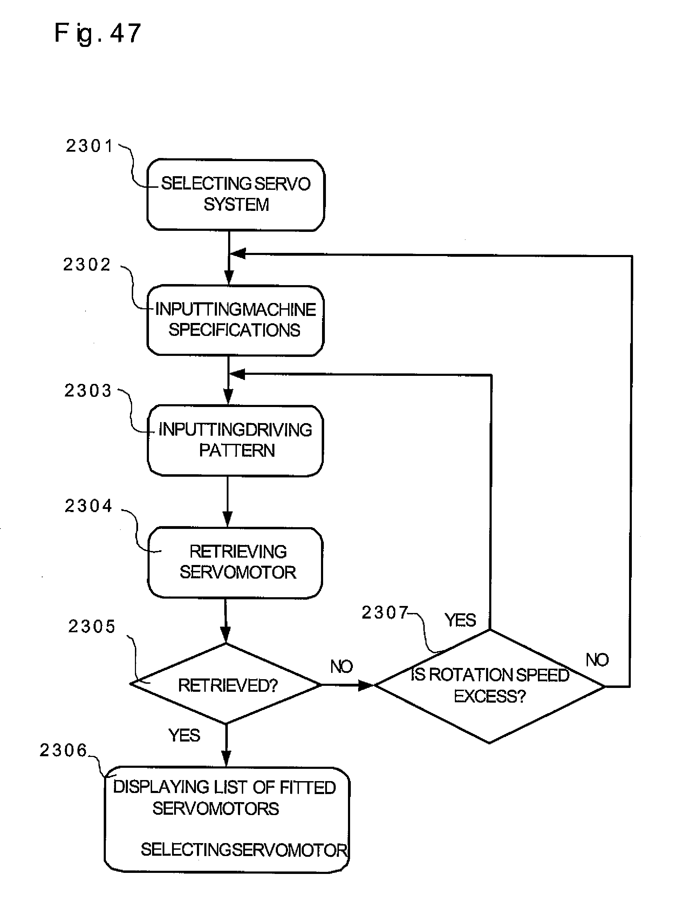

FIG. 47 is a flow chart showing the procedure of the servomotor selecting method, which is the second conventional example and is disclosed in Patent Document 2. When a program is executed on an operating system, servo system selection means selects a servo system. In the present example, a servo system subjected to servomotor drive, for example, a ball screw mechanism, is selected by the use of an input device 2103 (Process 2301: servo system selection process). Next, machine specification input means inputs the machine specifications pertaining to the selected servo system (Process 2302: machine specification input process). Next, load movement pattern input means inputs a load movement pattern (Process 2303: load movement pattern input process), and operation means obtains the requirement specifications of the servomotor on the basis of the input contents from Process 2301 to Process 2303.
Next, when a servomotor retrieval execution command is input, retrieval means executes the retrieval of a servomotor (Process 2304: retrieval process). At this time, if the operation unit 2201 retrieves servomotors fitting the condition of the retrieval from the servomotor specification table 2204 (Process 2305), the fitted servomotors are displayed as a list on a display unit 2101, and a servomotor to be applied is selected (Process 2306).
Incidentally, if not fitted servomotors are retried (Process 2305), or in case of an overspeed (Process 2307), a user of the program slows the speed input into the driving pattern, or lightens the load in the input of the machine specifications at the time of not the overspeed. Then, the method again retrieves the servomotor, and the retrieval is repeated until a fitted servomotor is retrieved.

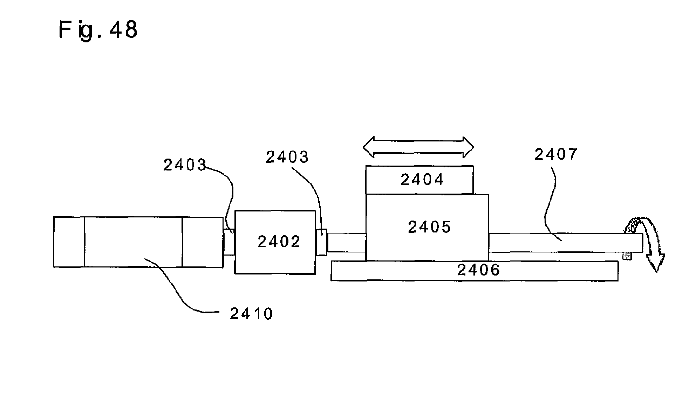

FIG. 48 is a configuration diagram of the servo system, which is the second conventional example and is disclosed in Patent Document 2. For example, a ball screw mechanism includes a servomotor 2401, a speed reducer 2402, a coupling 2403, a load 2404, load carrying platform 2405, a rail 2406, and a ball screw 2407 as shown in FIG. 48.
The servomotor selecting method defines the machine specifications of the ball screw mechanism as follows: load mass m_{W}, load carrying platform mass m_{T}, a load mass depending friction coefficient µ, a speed reduction ratio R, the inertia moment J_{G} of the speed reducer and the coupling, a ball screw pitch P_{B}, a ball screw diameter d_{B}, a ball screw length l_{B}, a ball screw density ρ_{B}, overall efficiency η, gravitational acceleration g, an external force F_{C} to the load, and a coefficient Kᵥₙ = (P_{B}/R).
From these mechanical specifications the followings can be numerically obtained: servomotor axis transformation load torque (friction torque T_{FR}), servomotor axis transformation steady torque T_{C}, servomotor axis transformation steady torque + friction torque T_{CFR}, which is the sum of the friction torque T_{FR} and steady torque T_{C}, servomotor axis transformation load inertia moment J_{L}, and the necessary maximum rotation speed n_{MAX}, interval necessary torque T_{Ai}, necessary maximum torque T_{MAX}, and execution torque T_{RMS} of the servomotor. Consequently, a servomotor can be selected by retrieving a fitted motor from the specifications required for the servomotor and the servomotor specification table stored in the storage unit 2203.
As described above, the conventional servomotor selecting method considers the rotation speed-torque characteristic as the motor retrieval process, and consequently it is possible to correctly judge whether the motor can be applied or not even in the region of rotation speeds in which sufficient output torque cannot be obtained.

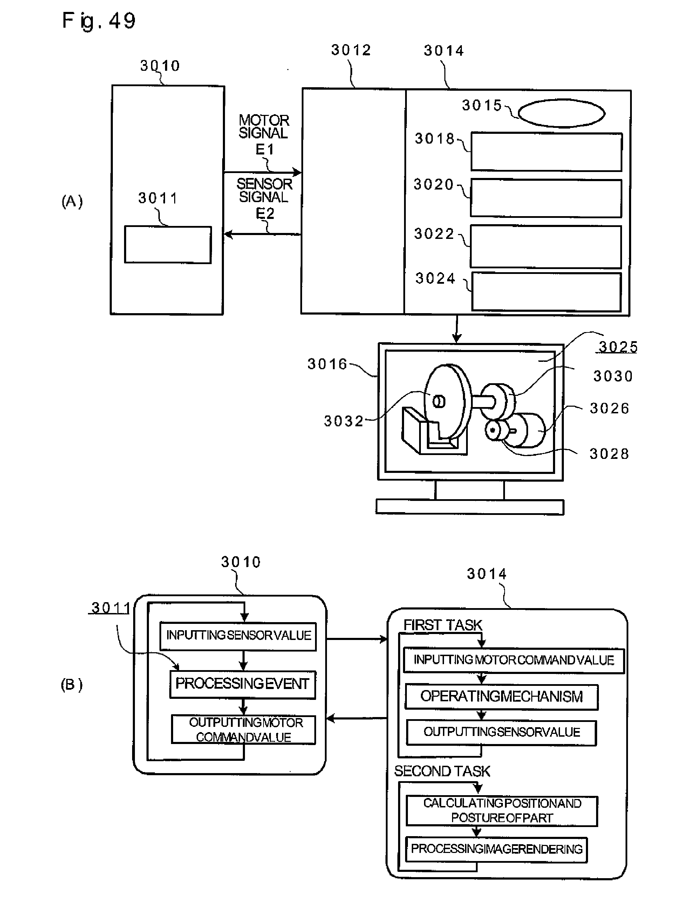

The simulation system, which is the third conventional example and is disclosed in Patent Document 3, will be described with reference to FIG. 49.
The simulation system, which is the third conventional example and is disclosed in Patent Document 3, is composed of a virtual mechanical model simulation device 3014 and a display unit 3016 as shown in FIG. 49. The virtual mechanical model simulation device 3014 includes an embedded software execution device 3010 and an interface unit 3012. Each of the embedded software execution device 3010 and the virtual mechanical model simulation device 3014 is a computer device, composed of a micro processing unit (MPU), a memory, a hard disk, and the like.
A control program 3011 outputs a motor signal E1 as a motor command value to the virtual mechanical model simulation device 3014 through the interface unit 3012 with a period of the loop sampling of the embedded software execution device 3010, and reads a simulation result of the virtual mechanical model simulation device 3014 from a sensor signal E2 indicating a sensor value. The control program 3011 repeats the above-mentioned processing.
Only the parts which move at the time of simulation operation in a virtual mechanical model 3015 built in the virtual mechanical model simulation device 3014 are extracted to be displayed on the display unit 3016 as a three-dimensional mechanism model 3025. This partial three-dimensional mechanism model 3025 operates on the basis of a simulation calculation in the virtual mechanical model simulation device 3014 which simulation calculation corresponds to the motor signal E1 from the embedded software execution device 3010.
When the motor signal E1 as the motor command value to a motor 3026 is output from the embedded software execution device 3010, the virtual mechanical model simulation device 3014 operates a mechanism operation to the constant rotation of the motor 3026 in the three-dimensional mechanism model 3025 which mechanism operation corresponds to the motor signal E1, and calculates the positions of gears 3028 and 3030 and a cam 3032 on the basis of the operation result of the mechanical operation to perform the second display of the three-dimensional mechanism model 3025 in the state of having operated on the basis of the simulation on the display unit 3016 by second three-dimensional processing.
The virtual mechanical model simulation device 3014 divides the simulation processing of the virtual mechanical model 3015 into the processing of a first processing unit 3018 and the processing of a second processing unit 3020, and thereby realizes the simulation operation based on an command value from the control program 3011 in real time without needing any synchronization processing waiting on the embedded software execution device 3010 side.

### Disclosure of the Invention

### Problems to Be Solved by the Invention

The motor capacity selection method, which is the first conventional example and is disclosed in Patent Document 1, is configured to set a desired driving pattern by combining elements and inputting data to the mechanical elements, and the method enables a customer to save a new mechanical element uniquely designed by the customer in the downloaded selection software in addition to the mechanical elements included in the selection software as standard equipment. But the method has no devices of combination expressions at the time of combining a plurality of elements, and consequently the method has a problem of the impossibility of processing the elements practically in case of there are a number of the elements which cannot be displayed in the screen of a selection tool.
In addition, although the method enables a customer to add a new mechanical element uniquely designed by the customer, the method does not consider any quite new mechanical elements, and can only deal with the new mechanical elements similar to those included as standard equipment practically.
The servomotor selecting method, which is the second conventional example and disclosed in Patent Document 2, makes the recalculation after the selection of a motor unnecessary by considering the rotation speed-torque characteristic at the time of adaptability judgment between the motor operation conditions and the motor specification table, and by giving the inertia moment of an option of a brake at the time of inputting machine specifications, but the method has a limitation of mechanism setting fitted to an actual machine, in which a plurality of mechanical elements are combined. Consequently, the method can only perform the mechanical setting including the limitation of the number of mechanical elements naturally.
Both of the motor capacity selection method, which is the first conventional example and is disclosed in Patent Document 1, and the servomotor selecting method, which is the second conventional example and is disclosed in Patent Document 2, do not consider the combinations in which mechanical elements parallely branch.
Furthermore, the methods do not consider the actual machine configuration including a plurality of axes, and have to apply a selection tool to each axis separately even in the configuration of including a load of another axis and the configuration of receiving an influence of an external force of another axis. The methods cannot select a plurality of axes at the same time.
Moreover, the methods can only select a servomotor on the basis of a rigid body mechanism and a command, and cannot ascertain the prior performance of a motor control device combining a mechanical structure, an encoder detection unit, servo control, a command unit, and a host controller.
The simulation system, which is the third conventional example and is disclosed in Patent Document 3, enables a virtual mechanical model to operate in real time without needing any synchronization waiting in the embedded software, but has no device for selecting a motor control device and needs an operation of selecting a motor control device among a plurality of candidates, ascertaining the characteristics of motor control device.

The present invention was invented in view of these problems, and is directed to provide a motor control device selecting apparatus, a motor control device selecting method, a computer program for realizing the method, and a storage medium of the computer program, each capable of combining transmission mechanism elements serially or parallely, storing the combination of the transmission mechanism elements as a subsystem model, utilizing the stored subsystem models by combining them as a transmission mechanism element, and furthermore building the subsystem models in many layers.

### Means for Solving Problems

In order to settle the above problems, the present invention is configured as follows.
The invention of a motor control device selecting apparatus according to Claim 1, is a motor control device selecting apparatus selecting a motor control device based on use conditions and a motor control device characteristic database, the motor control device including a motor driving a machine, a detection unit detecting an operation quantity of a detected body, which is either of the motor and the machine, a command unit generating a command signal, and a controller driving the motor based on the command signal, the motor control device forming a feedback loop so that the command signal and the operation quantity agree with each other, the motor control device selecting apparatus including: a selection operation unit performing a selection operation of the motor control device based on the use conditions and the motor control device characteristic database; an input unit inputting the use conditions; an output unit outputting a selection result of the motor control device and so forth; and a selection result storage unit storing the selection result, wherein the input unit includes a mechanism condition input unit inputting a power transmission element model, an external force model, and a mass load model as the use conditions, and a command condition input unit inputting a driving pattern of the motor as either of a load terminal and an operation pattern of the motor, the motor control device selecting apparatus **characterized in that**: the mechanism condition input unit includes a mechanism condition block input unit arranging a plurality of models of elements serially or parallely and enabling input of mechanical use conditions, and the motor control device selecting apparatus is further characterized by a subsystem storage unit capable of storing an arrangement of the elements in a row as a subsystem model.

Moreover, the invention of Claim 2 is the motor control device selecting apparatus according to Claim 1, wherein the subsystem model can be reused as one of the power transmission element model, the external force model, and the mass load model, each being input into the mechanism condition input unit.
Moreover, the invention according to Claim 3 is the motor control device selecting apparatus according to Claim 1, wherein the subsystem model can add one of motor models of a selected motor and a temporarily selected motor.
Moreover, the invention according to Claim 4 is the motor control device selecting apparatus according to Claim 1, wherein the input unit further includes an external force pattern condition input unit inputting an external force pattern of the external force model as the use conditions.
Moreover, the invention of Claim 5 is the motor control device selecting apparatus according to Claim 1, wherein the input unit further includes a motor control device specification condition input unit inputting a specification condition of the selected motor control device.
Moreover, the invention of Claim 6 is the motor control device selecting apparatus according to Claim 1, wherein the mechanism condition input unit can input one of two-dimensional and three-dimensional positions and directions, and a gravitation direction.

Moreover, the invention of Claim 7 is the motor control device selecting apparatus according to Claim 1, wherein the mechanism condition input unit can input a machine drawing and a mechanical property.
Moreover, the invention of Claim 8 is the motor control device selecting apparatus according to Claim 7, further characterized by a mechanism analysis operation unit performing a mechanism analysis on a machine side based on the use conditions.
Moreover, the invention of Claim 9 is the motor control device selecting apparatus according to Claim 1 or 7, wherein the mechanism condition input unit can input a peculiar mechanical elastic characteristic.
Moreover, the invention of Claim 10 is the motor control device selecting apparatus according to Claim 1, wherein the mechanism condition input unit input a condition of a fixed machine which is not driven by the motor.
Moreover, the invention of Claim 11 is the motor control device selecting apparatus according to Claim 1, further characterized by a thermal analysis operation unit estimating a heat rise of the motor and a periphery thereof based on the use conditions.
Moreover, the invention of Claim 12 is the motor control device selecting apparatus according to Claim 1, further characterized by a motor model having a characteristic of the motor, a controller model having a characteristic of the controller, and a detection unit model having a characteristic of the detection unit.
Moreover, the invention of Claim 13 is the motor control device selecting apparatus according to Claim 1, further characterized by a command unit model having a characteristic of the command unit.
Moreover, the invention of Claim 14 is the motor control device selecting apparatus according to Claim 1, wherein either of the mechanism condition input unit and the mechanism condition block input unit inputs mechanism conditions pertaining to a plurality of motor control devices.
Moreover, the invention of Claim 15 is the motor control device selecting apparatus according to Claim 1, wherein the command condition input unit inputs driving patterns pertaining to a plurality of motor control devices.
Moreover, the invention of Claim 16 is the motor control device selecting apparatus according to Claim 1, further characterized by an option combination database pertaining to the motor control device, wherein the motor control device selecting apparatus selects an option combination.

Moreover, the invention of a motor control device selecting method of Claim 17 is a motor control device selecting method for selecting a motor control device based on use conditions and a motor control device characteristic database, the motor control device including a motor, a detection unit, a command unit, and a controller, the motor control device selecting method including the steps of: inputting the use conditions; performing a selection operation of the motor control device based on the use conditions and the motor control device characteristic database; and outputting a selection result of the motor control device and so forth, wherein the step of inputting the use conditions include a step of inputting a mechanism condition of a power transmission element model, an external force model, and a mass load model as the use conditions, and a step of inputting a command condition using a driving pattern of the motor as either of a load terminal and an operation pattern of the motor, the motor control device selecting method **characterized in that**: the step of inputting the mechanism condition includes a step of inputting mechanical use conditions by arranging a plurality of models of elements serially or parallely, and the motor control device selecting method is further characterized by a step of storing an arrangement of the elements as a subsystem model.
Moreover, the invention of Claim 18 is the motor control device selecting method according to Claim 17, wherein the step of inputting the mechanism condition includes a step capable of inputting one of the power transmission element model, the external force model, and the mass load model as the subsystem model.
Moreover, the invention of Claim 19 is the motor control device selecting method according to Claim 17, wherein the step of inputting the command condition further includes a step of inputting an external force pattern of the external force model.
Moreover, the invention of Claim 20 is the motor control device selecting method according to Claim 17, wherein the step of inputting the use conditions further includes a step of inputting a specification condition of the motor control device.

Moreover, the invention of Claim 21 is the motor control device selecting method according to Claim 17, wherein the Step of inputting the mechanism condition further includes a step of inputting one of two-dimensional and three-dimensional positions and directions, and a gravitation direction.
Moreover, the invention of Claim 22 is the motor control device selecting method according to Claim 17, wherein the step of inputting the mechanism condition further includes a step of inputting a machine drawing and a mechanical property.
Moreover, the invention of Claim 23 is the motor control device selecting method according to Claim 22, further characterized by a step of performing a mechanism analysis on a machine side based on the use conditions.
Moreover, the invention of Claim 24 is the motor control device selecting method according to Claim 17 or 22, wherein the step of inputting the mechanism condition further includes a step of inputting a peculiar mechanical elastic characteristic.
Moreover, the invention of Claim 25 is the motor control device selecting method according to Claim 17, wherein the step of inputting the mechanism condition further includes a step of inputting a condition of a fixed machine which is not driven by the motor.
Moreover, the invention of Claim 26 is the motor control device selecting method according to Claim 17, further characterized by a step of estimating a heat rise of the motor and a periphery thereof based on the use conditions.
Moreover, the invention of Claim 27 is the motor control device selecting method according to Claim 17, further characterized by a step of examining a control characteristic using a motor model having a characteristic of the motor, a controller model having a characteristic of the controller, a detection unit model having a characteristic of the detection unit.
Moreover, the invention of Claim 28 is the motor control device selecting method according to Claim 17, further characterized by a step of examining an operation application using a command unit model having a characteristic of the command unit.
Moreover, the invention of Claim 29 is the motor control device selecting method according to Claim 17, further characterized by either a step of inputting mechanism conditions pertaining to a plurality of motor control devices included in the step of inputting the mechanism condition and a step of inputting driving patterns pertaining to a plurality of motor control devices included in the step of inputting the command condition.

Moreover, the invention of Claim 30 is the motor control device selecting method according to Claim 17, further characterized by a step of selecting an option combination pertaining to the motor control device.
Moreover, the invention of a computer program according to Claim 31 is characterized by realizing the motor control device selecting method according to any one of Claims 17-30.
Moreover, the invention of a storage medium according to Claim 32 is characterized by storing the computer program according to Claim 31.

### Effects of the Invention

The inventions according to Claims 1 and 17 enable the arrangement of the element models of the mechanism condition in series or in parallel, and enable the reproduction of the mechanism condition of a motor control device which is a selection object. Moreover, the inventions enable the storage of the arrangement of each element model as a subsystem model and the input of the mechanism condition in the state of being put in order.
Moreover, the inventions according to Claims 2 and 18 enable the storage of the arrangement of the elements in a row as the subsystem model and enable the reuse of the arrangement as the mechanism condition. Consequently the mechanism condition of the motor control device which is the selection object can be reproduced without receiving any limitations of the number of the element models of the mechanism condition. Moreover, the mechanism condition can be input in the state of being put in order.
Furthermore, the invention according to Claim 3 enables the reuse of the subsystem model, and enables the utilization of the selection result of another axis even in the selection of a motor control device having a multi-axis configuration, in which a load and an external force influence another axis. Consequently, the motor control device having the multi-axis configuration can be selected efficiently.

Moreover, the inventions according to Claims 4 and 19 enable the selection of a motor control device receiving the load of an external force.
Moreover, the inventions according to Claims 5 and 20 enable the narrowing down of the selection of a motor control device by means of the specifications of the motor control device, and enable the efficient selection of the motor control device.
Moreover, the inventions according to Claims 6 and 21 enable the clear definition of the relation between each axis even at the selection of a motor control device having the multi-axis configuration, in which a load and an external force influence another axis, and enable the quantification of mutual influences. Consequently, the motor control device having the multi-axis configuration can be selected efficiently.
Moreover, the inventions according to Claims 7 and 22 enable the utilization of a mechanism condition input with another tool, such as a three-dimensional CAD drawing, and enable the efficient selection of a motor control device.
Moreover, the inventions according to Claims 8 and 23 enable the selection of a motor control device even under the mechanism condition including an elastic body and a mechanism condition having a uniquely-produced individual configuration.
Moreover, the inventions according to Claims 9 and 24 enable the addition of a machine configuration including an elastic body to the mechanism condition. Moreover, the inventions enable the addition of the machine configuration in consideration of an elastic body characteristic calculated with another tool, such as a finite element method, to the mechanism condition. Thereby, a minute response simulation close to a real machine can be executed, and a motor control device can be selected.
Moreover, the inventions according to Claims 10 and 25 enable a minute response simulation close to a real machine including the influences of a machine stand unit and enable the selection of a motor control device.
Moreover, the inventions according to Claims 11 and 26 enable the selection of a motor control device in consideration of a heat rise in a motor and the periphery thereof.
Moreover, the inventions according to Claims 12 and 27 enable the selection of a motor control device in consideration of the responsibility in consideration of a controller. Furthermore, the inventions enable the execution of a minute response simulation close to a real machine and the selection of a motor control device.
Moreover, the inventions according to Claims 13 and 28 enable the selection of a motor control device in consideration of an entire operation application in both the cases of a single axis and multi-axes. Furthermore, the inventions also enable the verification of a sequence and a program of the operation application.
Moreover, the inventions according to Claims 14, 15, and 29 enable the input of a mechanism condition and a driving pattern of a motor control device having a multi-axis configuration, and enable the efficient selection of a motor control device having the multi-axis configuration.
Moreover, the inventions according to Claims 16 and 30 enable the selection of an option combination pertaining to a motor control device.
Moreover, the invention according to Claim 31 enables the utilization of the data of another computer program and another tool and the storage and the recording of data through a network and a local area network (LAN) by the computer program realizing a motor control device selecting method, and enables the efficient selection of a motor control device.
Moreover, the invention according to Claim 32 enables the storage of the computer program realizing the motor control device selecting method into a recording medium and thereby enables the conveyance and the dealings of the computer program.

### Brief Description of Drawings

FIG. 1 is a view showing the configuration of a motor control device selected in a first embodiment of the present invention;
FIG. 2 is a schematic configuration diagram of a motor control device selecting apparatus according to the first embodiment of the present invention;
FIG. 3 is a flow chart showing a motor control device selecting method according to the first embodiment of the present invention;
FIG. 4 is a view showing mechanism condition block input units of the motor control device selecting apparatus according to the first embodiment of the present invention;
FIG. 5 is a view showing input into a mechanism condition block input unit of the motor control device selecting apparatus according to the first embodiment of the present invention;
FIG. 6 is a diagram showing input into a command condition input unit of the motor control device selecting apparatus according to the first embodiment of the present invention;
FIG. 7 is a view showing the configuration of a motor control device selected in a second embodiment of the present invention;
FIG. 8 is a schematic configuration diagram of a motor control device selecting apparatus according to the second embodiment of the present invention;
FIG. 9 is a step of inputting use conditions of a flow chart showing a motor control device selecting method according to the second embodiment of the present invention;
FIG. 10 is a view showing a mechanism condition block input unit of the motor control device selecting apparatus according to the second embodiment of the present invention;
FIG. 11 is a diagram showing input of an external force pattern condition input unit of the motor control device selecting apparatus according to the second embodiment of the present invention;
FIG. 12 is a view showing the configuration of a motor control device selected in a third embodiment of the present invention;
FIG. 13 is a schematic configuration diagram of a motor control device selecting apparatus according to the third embodiment of the present invention;
FIG. 14 is a step of inputting use conditions of a flow chart showing a motor control device selecting method according to the third embodiment of the present invention;
FIG. 15 is a diagram showing a two-axis motor control device selecting procedure according to the third embodiment of the present invention;
FIG. 16 is a view showing a subsystem model and a mechanism condition block input unit of the motor control device selecting apparatus according to the third embodiment of the present invention;
FIG. 17 is a view showing the configuration of a motor control device selected by a fourth embodiment of the present invention;
FIG. 18 is a schematic configuration diagram of a motor control device selecting apparatus according to the fourth embodiment of the present invention;
FIG. 19 is a step of inputting use conditions of a flow chart showing a motor control device selecting method according to the fourth embodiment of the present invention;
FIG. 20 is a view showing a mechanism condition block input unit of the motor control device selecting apparatus according to the fourth embodiment of the present invention;
FIG. 21 is a diagram showing a command condition input unit and an external force pattern condition input unit for inputting a multi-axis driving pattern of the motor control device selecting apparatus according to the fourth embodiment of the present invention;
FIG. 22 is a view showing a subsystem model of a motor control device selecting apparatus according to a fifth embodiment of the present invention;
FIG. 23 is a schematic configuration diagram of a motor control device selecting apparatus according to a sixth embodiment of the present invention;
FIG. 24 is an outline of a flow chart showing a motor control device selecting method according to the sixth embodiment of the present invention;
FIG. 25 is a view showing the estimations of heat rises by a thermal analysis operation unit according to the sixth embodiment of the present invention;
FIG. 26 is a view showing the configuration of a motor control device selected in a seventh embodiment of the present invention;
FIG. 27 is a schematic configuration diagram of a motor control device selecting apparatus according to the seventh embodiment of the present invention;
FIG. 28 is an outline of a flow chart showing a motor control device selecting method according to the seventh embodiment of the present invention;
FIG. 29 is a view showing a mechanism condition block input unit of the motor control device selecting apparatus according to the seventh embodiment of the present invention;
FIG. 30 is a diagram showing a usage example of a command condition input unit and a command unit model for inputting a multi-axis driving pattern of the motor control device selecting apparatus according to the seventh embodiment of the present invention;
FIG. 31 is a view showing the configuration of a motor control device selected in an eighth embodiment of the present invention;
FIG. 32 is a schematic configuration diagram of a motor control device selecting apparatus according to the eighth embodiment of the present invention;
FIG. 33 is an outline of a flow chart showing a motor control device selecting method according to the eighth embodiment of the present invention;
FIG. 34 is a simplified configuration diagram and model diagram of the motor control device according to the eighth embodiment of the present invention;
FIG. 35 is a view showing a mechanism condition block input unit of the motor control device selecting apparatus according to the eighth embodiment of the present invention;
FIG. 36 is a diagram showing simulated responses by a controller model of the motor control device selecting apparatus according to the eighth embodiment of the present invention;
FIG. 37 is a schematic configuration diagram of a motor control device selecting apparatus according to a ninth embodiment of the present invention;
FIG. 38 is an outline of a flow chart showing a motor control device selecting method according to the ninth embodiment of the present invention;
FIG. 39 is a view showing a three-dimensional CAD and the results of a finite element method (FEM) of a motor control device according to the ninth embodiment of the present invention;
FIG. 40 is a simplified configuration diagram and model diagram of the motor control device according to the ninth embodiment of the present invention;
FIG. 41 is a view showing a mechanism condition input unit of the motor control device according to the ninth embodiment of the present invention;
FIG. 42 is a view of a simulation of the motor control device according to the ninth embodiment of the present invention;
FIG. 43 is a view showing the configuration of a motor control device selected in a tenth embodiment of the present invention;
FIG. 44 is a diagram showing a subsystem model of the motor control device according to the tenth embodiment of the present invention;
FIG. 45 is a flow chart of a motor capacity selection method, which is a first conventional example and is disclosed in Patent Document 1;
FIG. 46 is a configuration diagram showing the internal configuration of an electronic computer, which is a servomotor selecting apparatus of a second conventional example and is disclosed in Patent Document 2;
FIG. 47 is a flow chart showing a procedure of a servomotor selecting method of the second conventional example disclosed in Patent Document 2;
FIG. 48 is the configuration diagram of a servo system of the second conventional example disclosed in Patent Document 2; and
FIG. 49 is a principle explanatory diagram of a third conventional example disclosed in Patent Document 3.

### Explanation of Marks

- 1,: 1a, 1b: motor
- 2,: 2a, 2b: detection unit
- 3:: command unit
- 4,: 4a, 4b: controller
- 7:: input unit
- 8:: output unit
- 9:: selection operation unit
- 10:: subsystem model
- 11:: motor model
- 12:: detection unit model
- 13:: command unit model
- 14:: controller model
- 15:: characteristic database of motor control device
- 16:: option combination database
- 21:: mechanism condition input unit
- 22:: command condition input unit
- 23:: external force pattern condition input unit
- 24:: specification condition input unit of motor control device
- 33:: mechanism condition block input unit
- 34:: subsystem storage unit
- 35:: mechanism analysis operation unit
- 36:: thermal analysis operation unit
- 40:: selection result recording unit
- 100:: computer
- 101,: 101a, 101b: coupling
- 102,: 102a, 102b: gear
- 104,: 104a, 104b: ball screw
- 105,: 105a, 105b: ball screw nut
- 106,: 106a, 106b: table and mass load
- 107,: 107a, 107b: machine stand unit
- 108:: belt pulley
- 109:: pinion
- 110:: rack
- 111:: rotating load
- 117:: direction transformation mechanism
- 118:: belt
- 128:: pulley
- 142:: external force
- 151:: linear motion guide
- 161:: piston portion
- 162:: crank portion
- 210,: 210a, 210b: controller option
- 211:: command unit option
- 301:: speed reduction element model
- 302:: horizontal model of ball screw
- 303:: vertical model of ball screw
- 304:: oblique model of ball screw
- 305:: horizontal model of belt pulley
- 306:: vertical model of belt pulley
- 308:: horizontal model of rack & pinion
- 309:: vertical model of rack & pinion
- 310:: roll feeder model
- 311:: translation external force model
- 312:: rotating external force model
- 313:: mass load model
- 314:: friction model
- 315:: rotating body model
- 316:: eccentric rotating body model
- 317:: translation direction transformation model
- 318:: rotation direction transformation model
- 319:: coupling model
- 400:: linear motor structure model
- 402:: horizontal ball screw set model
- 403:: vertical ball screw set model
- 405:: horizontal belt pulley set model
- 406:: vertical belt pulley set model
- 408:: horizontal rack & pinion set model
- 409:: vertical rack & pinion set model
- 410:: roll feeder set model
- 411:: rotating body set model
- 412:: rotating table set model
- 413:: piston & crank set subsystem model
- 420:: spring element
- 500:: summation model
- 501:: ground model
- 502:: translation spring model
- 503:: rotating spring model
- 504:: bearing supporting side model
- 505:: rotation restriction model
- 506:: translation restriction model
- 507:: fixing model
- 607:: machine stand unit model
- 2201:: operation unit
- 2203:: storage unit
- 2204:: servomotor specification table
- 2402:: speed reducer
- 2403:: coupling
- 2404:: load
- 2405:: load carrying platform (screw box)
- 2406:: rail
- 2407:: ball screw
- 2410:: servomotor
- 3010:: embedded software execution device
- 3011:: control program
- 3012:: interface unit
- 3014:: virtual mechanical model simulation device
- 3015:: virtual mechanical model
- 3016:: display unit
- 3018:: input-output and operation processing unit (first processing unit)
- 3020:: rendering processing unit (second processing unit)
- 3022:: driving torque operation processing unit (third processing unit)
- 3024:: command input storage unit
- 3025:: three-dimensional mechanism model
- 3026:: motor
- 3028,: 3030: gear
- 3032:: cam

### Best Mode for Carrying Out the Invention

In the following, embodiments of the present invention will be described with reference to drawings.

### [Embodiment 1]

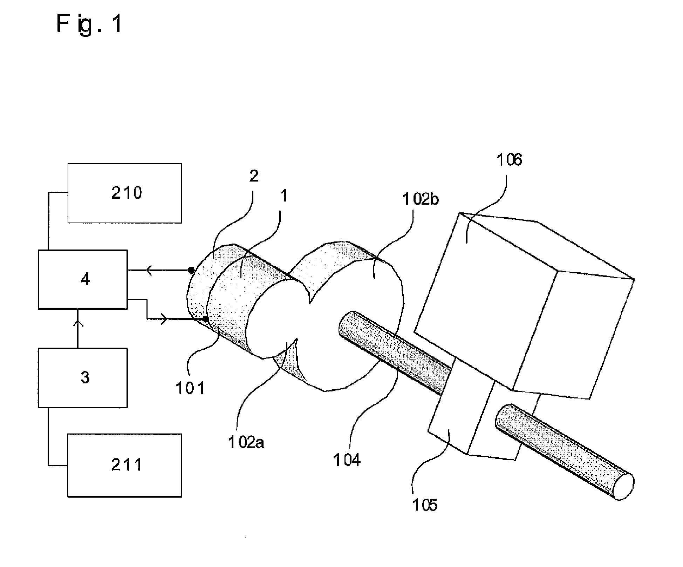

FIG. 1 is a view showing the configuration of a selected motor control device showing a first embodiment of the present invention. In FIG. 1, 1 denotes a motor; 2 denotes a detection unit; 3 denotes a command unit; 4 denotes a controller; 101 denotes a coupling; 102a and 102b severally denote a gear; 104 denotes a ball screw; 105 denotes a ball screw nut; 106 denotes a table and mass load; 210 denotes a controller option; 211 denotes a command unit option.

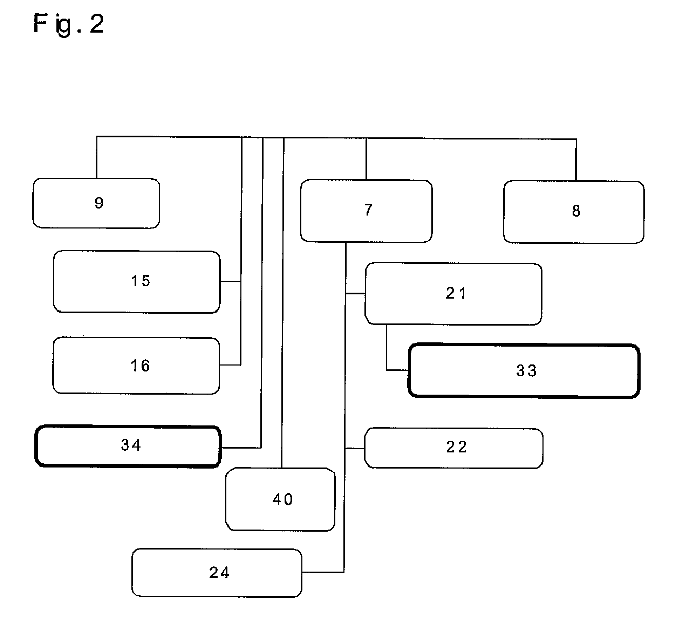

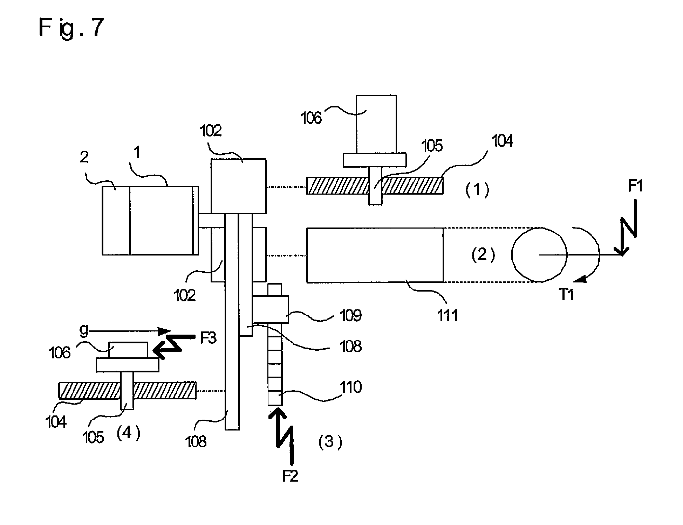

FIG. 2 is a schematic configuration diagram of a motor control device selecting apparatus according to the first embodiment of the present invention. In FIG. 2, 7 denotes an input unit; 8 denotes an output unit; 9 denotes a selection operation unit; 15 denotes a characteristic database of a motor control device; 16 denotes an option combination database; 34 denotes a subsystem storage unit; 40 denotes a selection result recording unit.
Moreover, 21, belonging to the input unit 7, denotes a mechanism condition input unit; 22 denotes a command condition input unit; 24 denotes a specification condition input unit of the motor control device; 33, belonging to the mechanism condition input unit 21, denotes a mechanism condition block input unit.

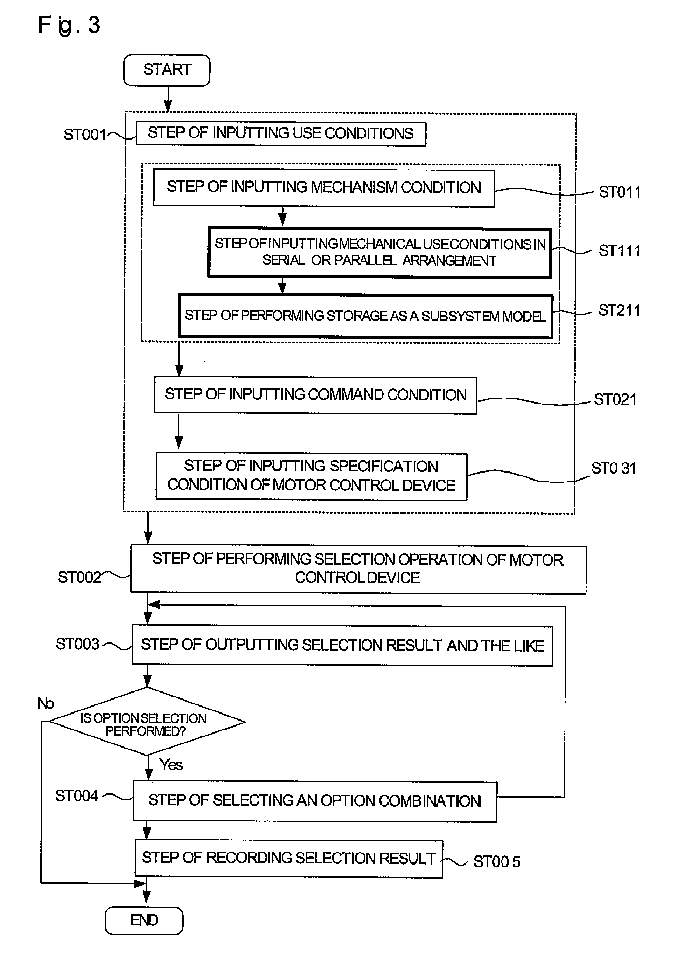

FIG. 3 is a flow chart showing a motor control device selecting method according to the first embodiment of the present invention. ST001 is a step of inputting use conditions; ST002 is a step of performing a selection operation of a motor control device; ST003 is a step of outputting a selection result and the like; ST004 is a step of selecting an option combination; ST005 is a step of recording a selection result; ST011 is a step of inputting a mechanism condition; ST021 is a step of inputting a command condition; ST031 is a step of inputting a specification condition of a motor control device; ST111 is a step of inputting mechanical use conditions in a serial or parallel arrangement; ST211 is a step of performing storage as a subsystem model.

The parts of the present invention which are different from those of the conventional techniques are especially the pars shown by a thick line frame in FIG. 2 including the subsystem storage unit 34 and the mechanism condition block input unit 33.
Moreover, the different parts are those of Step ST211 of performing storage as a subsystem model and Step ST111 of inputting mechanical use conditions in a serial or parallel arrangement.
The subsystem storage unit 34 and Step ST211 of performing storage as a subsystem model can store an arrangement of each element model of a mechanism condition as a subsystem model. Moreover, the subsystem model can be utilized in an arrangement similar to the element models. Furthermore, a mechanism condition block input unit 33 and Step ST011 of inputting a mechanism condition do not only serially arrange a plurality of elements, but also can parallely arrange the elements. Thereby, a plurality of systems of mechanism conditions can be input.

The first embodiment of the present invention performs processing through the procedure of FIG. 3.
At Step ST011 of inputting a mechanism condition and at Step ST021 of inputting a command condition, use conditions are input, and the selection of a motor control device is performed.
Step ST011 of inputting a mechanism condition includes Step ST111 of inputting mechanical use conditions in a serial or parallel arrangement, and Step ST211 of performing storage as a subsystem model. After Step ST011 of inputting a mechanism condition, Step ST021 of inputting a command condition and Step ST031 of inputting a specification condition of the motor control device are completed. After that, Step ST001 of inputting use conditions is completed, and the processing proceeds to Step ST002 of performing a selection operation of a motor control device and Step ST003 of outputting a selection result and the like. In case of selecting an option, the processing proceeds to Step ST004 of selecting an option combination, and this result is displayed at Step ST003.
If there are no options to be selected, then the selection of a motor control device is completed. The selection result can be recorded at Step ST005 of recording a selection result.
The mechanistic condition, which is an important element of the use conditions, is performed by the mechanism condition block input unit 33 (FIG. 2) in the mechanism condition input unit 21 (FIG. 2) at Step ST011 of inputting a mechanism condition.

### <Step ST011>

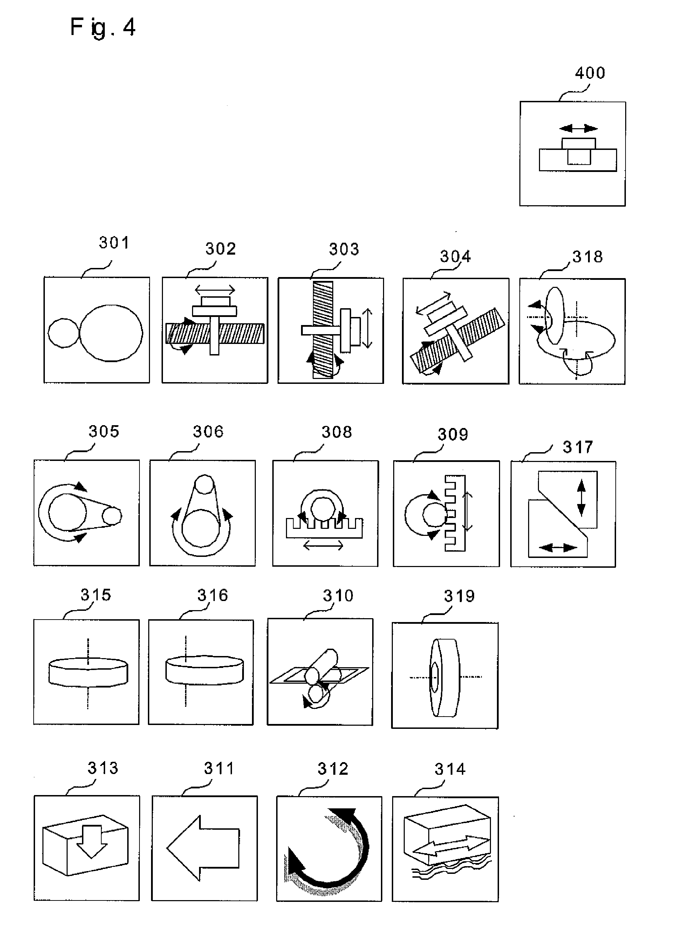

FIG. 4 is a view showing the mechanism condition block input units of the motor control device selecting apparatus according to the first embodiment of the present invention. In FIG. 4, 301 denotes a speed reduction element model; 302 denotes horizontal model of a ball screw; 303 denotes a vertical model of a ball screw; 304 denotes an oblique model of a ball screw; 305 denotes a horizontal model of belt pulley; 306 denotes a vertical model of belt pulley; 308 denotes a horizontal model of a rack & pinion; 309 denotes a vertical model of a rack & pinion; 310 denotes a roll feeder model; 311 denotes a translation external force model; 312 denotes a rotating external force model; 313 denotes a weight load model; 314 denotes a friction model; 315 denotes a rotating body model; 316 denotes an eccentric rotating body model; 317 denotes a translation direction transformation model; 318 denotes a rotation direction transformation model; 319 denotes a coupling model; 400 denotes a linear motor structure model.
These are mechanisms for transmitting a motion to a motion severally, such as a rotational motion to a rotational motion, a rotational motion to a linear motion, a linear motion to a linear motion, and a linear motion to a rotational motion, and various element models are prepared in the mechanism condition block input unit 33 independent of the above-given mechanisms.
The mechanism condition is input by combining the models of the mechanism condition block input unit 33 so as to meet the configuration of actual motor control device of FIG. 1.

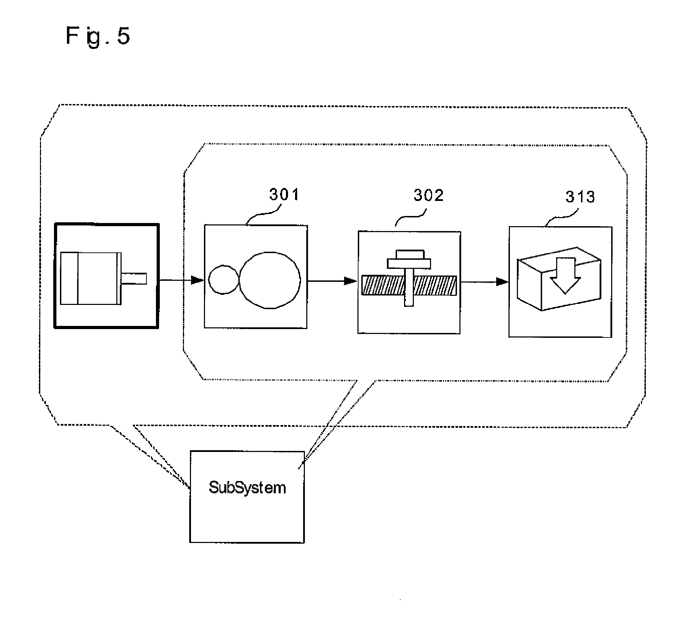

FIG. 5 is a view showing input into the mechanism condition block input units (FIG. 3) of the motor control device selecting apparatus according to the first embodiment of the present invention.
In order to form the same configuration as that of FIG. 1, the speed reduction element model 301, the horizontal model of a ball screw 302, and the weight load model 313 are serially connected after the model diagram of the motor 1. The rotational motion of the motor 1 is transmitted as a rotational motion by the gears 102a and 103 (301), and the rotational motion is transformed into a translatory movement by the ball screw 104 and the ball screw nut 105 (302). Then, the table and mass load 106 is moved in the translatory movement.
If the operation is reproduced in each model in the mechanism condition block input unit 33 (FIG. 2), then the rotational motion is input, and the speed reduction element model 301, which outputs a rotational motion, and the horizontal model of a ball screw 302, which outputs a translatory movement, are connected. Moreover, the linear motion portion of the horizontal model of a ball screw 302 can input an external force in a rectilinear direction and an external force in the gravitation direction, and the mass load model 313 is connected to the horizontal model of a ball screw 302. Thereby an expression can be performed.
Incidentally, characteristics such as a gear ratio, inertia moment, and efficiency can be separately input into the speed reduction element model 301. Moreover, a ball screw pitch, inertia moment, a ball screw length, thickness, and mass load can be separately input into the horizontal model of a ball screw 302. Although the table and mass load 106 is input as the mass load model 313 here, the table and mass load 106 may be input as the mass load of the horizontal model of a ball screw 302.
As shown in FIG. 5, the mechanism of the real machine is reproduced by the mechanism condition block input unit 33, and the input of the mechanism condition is completed.
The configuration composed of the speed reduction element model 301, the horizontal model of a ball screw 302, and the mass load model 313 in a lump can be stored in the subsystem storage unit 34 (FIG. 2) as a subsystem.
Moreover, a provisional determined model and a model of the motor 1 after the completion of a selection can be inclusively stored in the subsystem storage unit 34.
If the input of the mechanism condition has been completed, then subsystems are ordinarily stored at Step ST211 (FIG. 3) of performing storage as the subsystem model.
A command condition further exists in the use conditions of the motor control device. Accordingly, the processing proceeds to Step ST021 of inputting a command condition is input.

### <Step ST021>

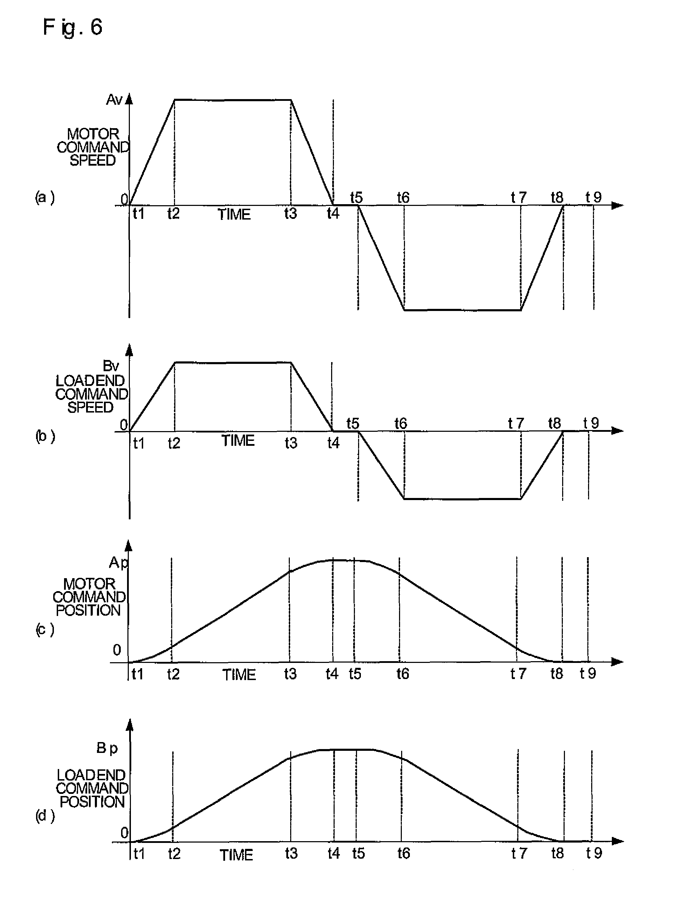

FIG. 6 is a diagram showing input into the command condition input unit of the motor control device selecting apparatus according to the first embodiment of the present invention. In FIG. 6, four graphs of a motor command speed, a load end command speed, a motor command position, and a load end command position are shown from above.
The motor command speed and the motor command position indicate the command speed and the command position of the motor 1 in FIG. 1, respectively, and the load end command speed and the load end command position indicate the command speed and the command position of the table and mass load 106 in FIG. 1, respectively. The mechanism conditions such as the gear ratio and the ball screw pitch relate to the motor 1 and the load end (106). If Step ST011 (FIG. 3) of inputting a mechanism condition has been completed, then input of any one of the factors of FIG. 6 determines the other factors.
Incidentally, a position or a speed of the motor or the load end may be input at Step ST021 of inputting a command condition before Step ST011 of inputting a mechanism condition. If Step ST011 of inputting a mechanism condition is completed, then also the command condition follows the mechanism condition.

### <Step ST031>

Next, the processing proceeds to Step ST031 (FIG. 3) of inputting a specification condition of a motor control device. At Step ST031 of inputting a specification condition of a motor control device is input, a previously known specification condition of the motor control device is input with the specification condition input unit of a motor control device 24 (FIG. 2).
The specifications of a motor control device indicate the series of the motor 1, the controller 4, and the command unit 3 of FIG. 1, the resolution of the detection unit 2, and the like, and the input of the specifications is performed in order to narrow down a selection result to some extent. Accordingly, although ST031 is drawn before Step ST002 of performing a selection operation of a motor control device in FIG. 3, ST031 may be executed after ST002.

### <Step ST002>

The processing proceeds to Step ST002 of performing a selection operation of a motor control device next to Step ST031 of inputting a specification condition of a motor control device. At Step ST002 of performing a selection operation of a motor control device, the selection operation unit 9 selects a motor control device corresponding to the use conditions among the characteristic database of a motor control device 15 (FIG. 2).
The selection operation unit 9 calculates the axis transformation inertia moment of the motor on the basis of the mechanism condition, and calculates the maximum torque, effective torque, a load factor, a regenerative resistance capacity, and the like, which are necessary for move the whole inertial moment from the command condition.
Because the characteristics of the motor control device are recorded in the characteristic database of a motor control device 15, the motor control device corresponding to the use conditions can be selected.
If the conditions are narrowed down at Step ST031 of inputting a specification condition of a motor control device, the motor control device is selected in consideration of the narrowed-down conditions.
By the processing described above, the motor control device meeting the use conditions can be selected.

### <Step ST003>

If necessary peripheral equipment is not gotten ready even if a motor control device can be selected, the motor control device does not operate. If the necessary peripheral equipment has been already definite, then the processing may be completed after ST003 of FIG. 3. If the peripheral equipment is not definite, then the processing proceeds to Step ST004 of selecting an option combination.

### <Step ST004>

The option combination include various combinations, such as a power cable connecting the motor 1 and the controller 4, an encoder cable connecting the detector 2 and the controller 4, a signal input and output cable connecting the controller 4 and the command unit 3, and an operation unit of the controller 4 in FIG. 1. These pieces of information are recorded in the option combination database 16, the selection operation unit 9 narrows down the peripheral equipment on the basis of the selection result of the motor control device to select the necessary peripheral equipment. In case of a cable or the like, the type of the cable can be displayed together with the selection input thereof, such as the length and the kind of a wire rod. Recommended articles of a breaker, a noise filter, and the like may be displayed even if the articles are not manufacturer's products.

### <Step ST005>

The selection result of the motor control device and the selection result of the option peripheral equipment described above can be recorded at Step ST005 of recording a selection result. The selection result recording unit 40 (FIG. 2) can record and save the selection result of the motor control device and the selection result of the option peripheral equipment in an electronic file or the like.
Incidentally, although the configuration composed of the speed reduction element model 301, the horizontal model of a ball screw 302, and the mass load model 313 in a lump is stored in the subsystem storage unit 34 as a subsystem in FIG. 5 in the present embodiment, one of the element models can be stored in the subsystem storage unit 34 as a subsystem. The speed reduction element model 301 and the horizontal model of a ball screw 302 can be stored in the subsystem storage unit 34 as a subsystem. A subsystem may be utilized by being combined to each of the element models, and the combined subsystem model can be further stored in the subsystem storage unit 34 as a subsystem.

### [Embodiment 2]

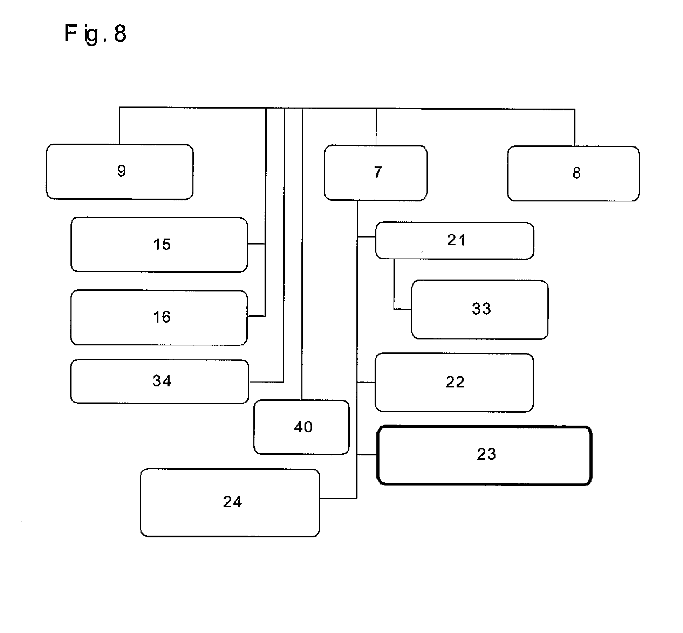

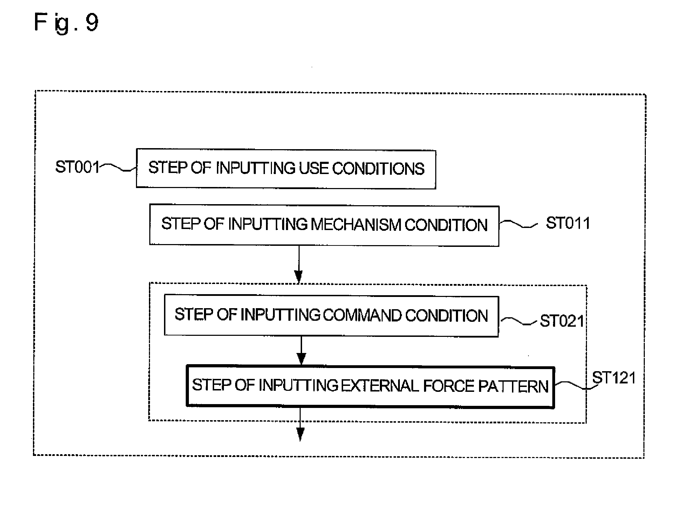

FIG. 7 is a view showing the configuration of a motor control device selected in a second embodiment of the present invention; FIG. 8 is a schematic configuration diagram of a motor control device selecting apparatus according to the second embodiment of the present invention; FIG. 9 is a step of inputting use conditions of a flow chart showing a motor control device selecting method according to the second embodiment of the present invention.

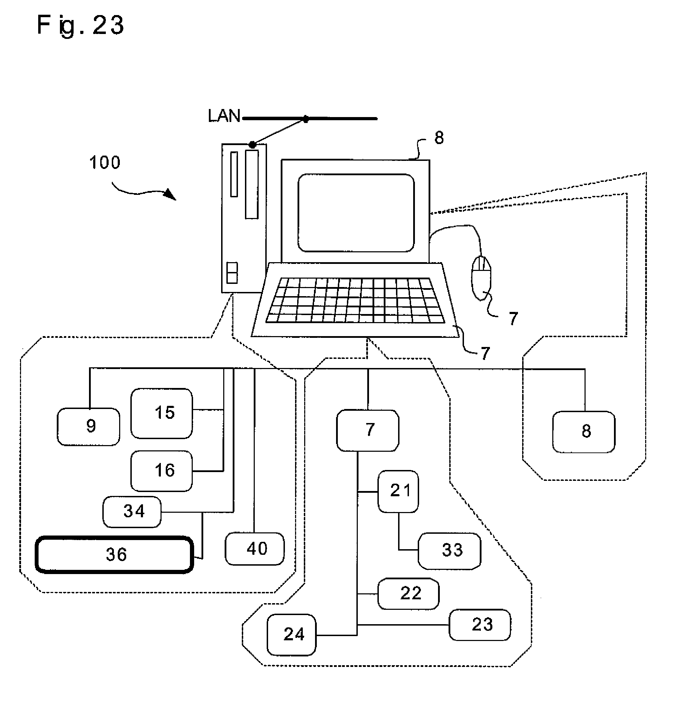

In FIG. 7, 108 denotes a belt pulley; 109 denotes a pinion; 110 denotes a rack; 111 denotes a rotating load; F1, F2, and F3 denote external forces. T1 denotes the torque given by the external force F1. The ball screw 104, on which an external force F3 is multiplied, is configured in a vertical axis direction. In FIG. 8, 23 denotes an external force pattern condition input unit. In FIG. 9, ST121 is a step of inputting an external force pattern.
The present invention differs from the first embodiment in the following points:
the point in which four rotational motions are transmitted from one motor 1 in parallel to each other in FIG. 7 to be dispersed into:
   (1) a gear 102 and the ball screw 104,
   (2) the gear 102 and the rotating load 111,
   (3) the belt pulley 108, and the rack 110 and the pinion 109, and
   (4) the belt pulley 108 and the vertical axis ball screw 104; furthermore
the point in which the external forces F1, F2, and F3 are given to (2), (3), and (4). Incidentally, the external force F1 is given to (2) as the torque T1.

Moreover, the point in which the external force pattern condition input unit 23 is added to the configuration of FIG. 2 in FIG. 8, and
the point in which Step ST121 of inputting an external force pattern is added in FIG. 9 are different from the first embodiment.

In the second embodiment of the present invention, processing proceeds in conformity with the procedure of FIG. 3 similarly to that of the first embodiment. Although the details of Step ST011 of inputting a mechanism condition are omitted in FIG. 9, the procedure is composed of Step ST111 of inputting mechanical use conditions in a serial or parallel arrangement and Step ST211 of performing storage as a subsystem model similarly to that of the first embodiment.

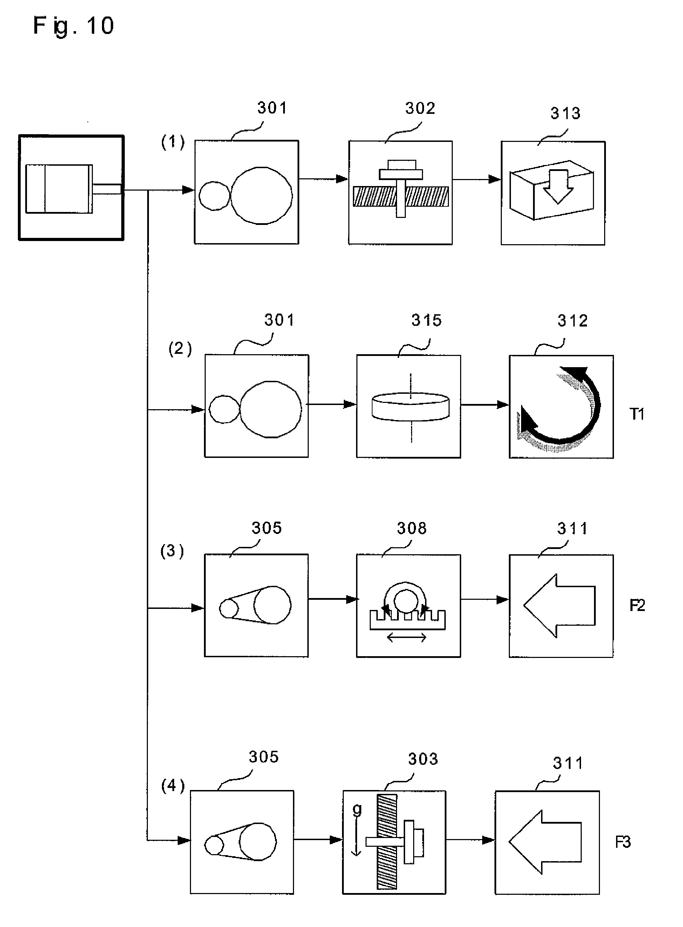

FIG. 10 is a view showing mechanism condition block input unit of the motor control device selecting apparatus according to the second embodiment of the present invention. Similarly to the first embodiment, the mechanism condition is input by combining the models of the mechanism condition block input unit 33 so as to meet the configuration of actual motor control device of FIG. 8.

The models shown in FIG. 4 of the first embodiment are combined to be configured as the four-parallel element model. From the models of the motor, the models of above (1), (2), (3), and (4) are arranged. The rotating external force model 312 is given to (2), and the translation external force model 311 is given to (3) and (4).
In (1), the speed reduction element model 301 inputting a rotational motion of a motor and outputting a rotational motion and the horizontal model of a ball screw 302 inputting a rotation motion and outputting a translatory movement are connected. Moreover, the linear motion portion of the horizontal model of a ball screw 302 can input an external force in a rectilinear direction and an external force in the gravitation direction, and the linear motion portion of the horizontal model of a ball screw 302 can be expressed by connecting the mass load model 313 to the horizontal model of a ball screw 302.
In (2), the speed reduction element model 301 inputting a rotational motion of a motor and outputting a rotational motion and the rotating body model 315 inputting a rotational motion, outputting a rotational motion, and being a rotating load are connected. Moreover, the rotating body model 315 can input disturbance torque, and is multiplied by the torque T1.
In (3), the horizontal model of a belt pulley 305 inputting a rotational motion of a motor and outputting a rotational motion and the horizontal model of a rack & pinion 308 outputting the rotational motion and a translatory movement are connected. The horizontal model of a rack & pinion 308 can input an external force in a rectilinear direction and an external force in a gravitation direction, and is multiplied by the translation external force model 311, which is an external force in the rectilinear direction.
In (4), the horizontal model of a belt pulley 305 inputting the rotational motion of the motor and outputting the rotational motion and the vertical model of a ball screw 303 inputting the rotational motion and outputting a translatory movement are connected. The vertical model of a ball screw 303 can input an external force in a rectilinear direction (gravitation direction owing to its vertical axis) and an external force in a gravitation direction, and is multiplied by the translation external force model 311, which is the external force in the gravitation direction.
The characteristic of each element can be separately input into each model similarly to the first embodiment.
Moreover, the four-parallel configuration can be stored in the subsystem storage unit 34 (FIG. 8) as a subsystem in a lump.

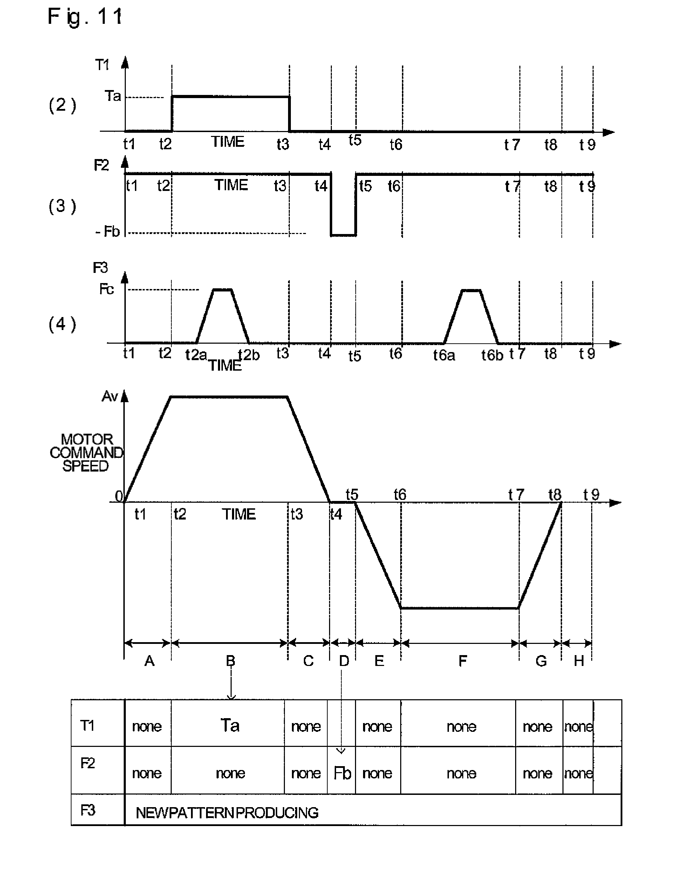

Because the use conditions of the motor control device include the command condition, the input of the command condition into the command condition input unit 22 is performed at Step ST021 (FIG. 9) of inputting a command condition similarly to the first embodiment.
An external force is input into the external force pattern condition input unit 23 (FIG. 8) at Step ST121 of inputting an external force pattern. FIG. 11 is a diagram showing input into the external force pattern condition input unit of the motor control device selecting apparatus according to the second embodiment of the present invention.
FIG. 11 shows the external force T1 to (2), the external force F2 to (3), and the external force F3 to (4) among the four-parallel mechanisms. The external force pattern may be set on the basis of the sections (a)-(h) of a command of the motor shown in the lower step of FIG. 11 as T1 and F2. As the T1, the external force pattern condition input unit is multiplied by the torque of Ta in an area (b) from t2 to t3 as the external force. As the F2, an external force of -Fb is multiplied in an area (d) from t4 to t5. Moreover, an external force pattern may be input as an independent pattern regardless of a command. F3 is input into the external force pattern condition input unit 23 (FIG. 8) so that external forces up to Fc are multiplied in an area from t2a to t2b and an area from t6a to t6b.

In such a way, because the mechanism condition, the command condition, and the external force pattern of FIG. 7 are input, the specification condition of the motor control device is input, and the selection operation of the motor control device is performed similarly to the first embodiment.
In the selection operation unit 9 (FIG. 8), the maximum torque, effective torque, a load factor, a regenerative resistance capacity, and the like are calculated in consideration of an inertia moment and the external forces, and consequently the motor control device corresponding to the use conditions can be selected from the characteristic database of a motor control device 15 (FIG. 8).
In FIG. 9, Step ST031 of inputting a specification condition of a motor control device, Step ST002 of performing a selection operation of a motor control device, Step ST003 of outputting a selection result and the like, Step ST004 of selecting an option combination, and Step ST005 of recording a selection result, in FIG. 3 are omitted, but a motor control device meeting use conditions can be selected including options similarly to the first embodiment.
Incidentally, although the four-parallel element model is configured at a time for inputting a mechanism condition in FIG. 10, it is also possible to store the systems (1), (2), (3), and (4) in the subsystem storage unit 34 (FIG. 8) as subsystem models once, and to arrange the subsystem models (1), (2), (3), and (4) in parallel with each other by reusing the stored subsystem models (1), (2), (3), and (4).
A subsystem model can be further placed in a subsystem model, and no limitations exist in the hierarchical structure.
Although the lines connecting element models to each other are branched at the time of branching the element models in parallel with each other as shown in FIG. 10 in the present embodiment, mechanical elements may be input by making the parallel branches more definite by the use of branch models.
Moreover, although an external force is given to the linear motion portion by the horizontal model of a ball screw 302 in the system (1) in FIG. 10 in the present embodiment, input and output of an element model can be changed by editing the internal characteristic, and, for example, it is also possible to change the output of the horizontal model of a ball screw 302 into a rotational motion of the ball screw to add the rotating external force model 312, to which torque is multiplied, and to arrange the element models of rotational motions in series to each other. Any element model may be configured so that the input and the output of the element model can be manually changed.
Moreover, since the mechanism of dispersing loads in parallel with each other from one motor is adopted as the present embodiment, a movement pattern may be input by being selected from a plurality of load ends at the time of performing input to the command condition input unit 22 (FIG. 8) at Step ST021 (FIG. 9) of inputting a command condition. Although the load end is one since FIG. 6 of the first embodiment is one system, if there are load ends of a plurality of systems, then a driving pattern may be input while displaying all the load ends, or a driving pattern may be input while displaying one load end selected from the load ends of a plurality of systems.

### [Embodiment 3]

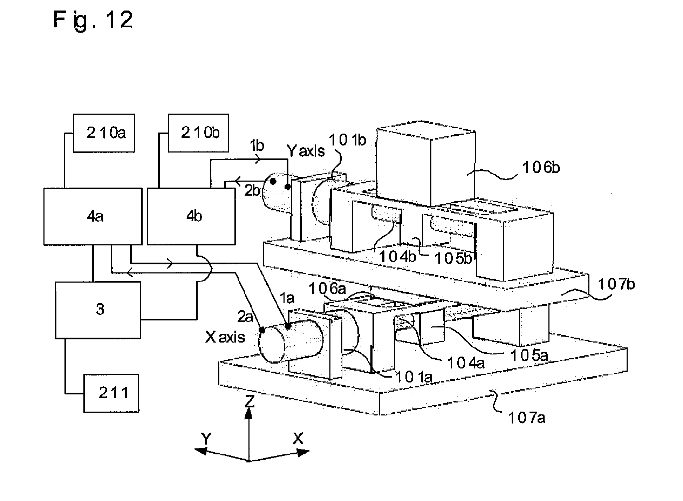

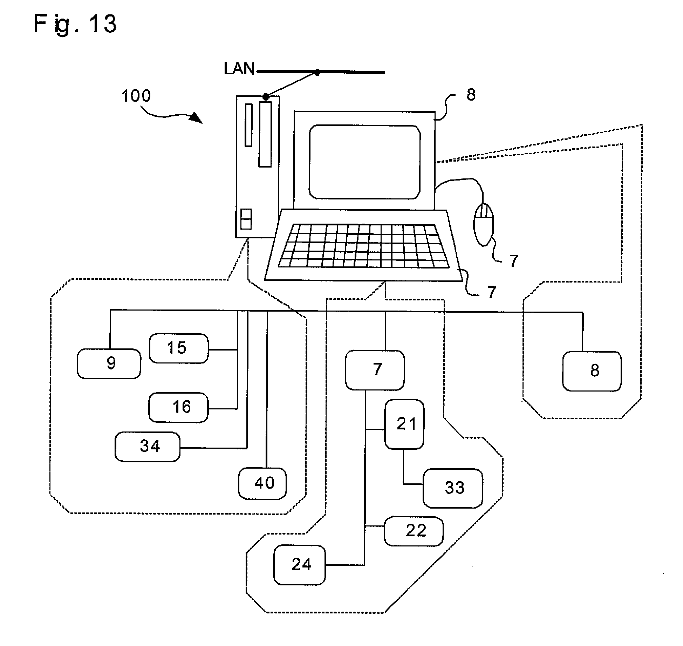

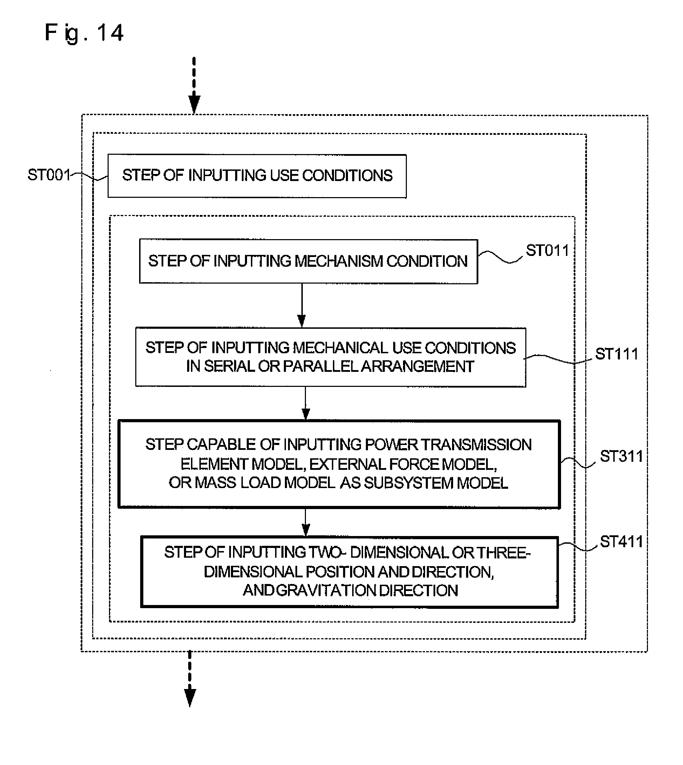

FIG. 12 is a view showing the configuration of a motor control device selected in a third embodiment of the present invention; FIG. 13 is a schematic configuration diagram of a motor control device selecting apparatus according to the third embodiment of the present invention; FIG. 14 is a step of inputting use conditions of a flow chart showing a motor control device selecting method according to the third embodiment of the present invention.
The motor control device selected in this embodiment is configured so that the Y axis thereof is mounted on the X axis thereof as shown in FIG. 12, and the motor 1 is connected to the ball screw 104 with a coupling 101 put between them. The ball screw nut 105 performs a translatory movement and moves the table and mass load 106. The whole Y axis is the table and mass load 106 for the X axis, and the X axis must making the whole Y axis perform a translatory movement.
In FIG. 13, 100 denotes a computer, and the motor control device selecting apparatus or the motor control device selecting method is a computer program operating on the computer 100 and a storage medium. In the drawing, since the same marks as those in FIG. 2 denote the same matters as those in FIG. 2, duplicate descriptions are omitted.
The points of the third embodiment of the present invention different from those in the first and second embodiments are:
(1) the point that motor control device selecting apparatus is composed of the computer 100, and
(2) the point that the motor control device to be selected has a two-axis configuration.
   Accordingly, Step ST311 capable of inputting a power transmission element model, an external force model, or a mass load model as the subsystem model, and Step ST411 of inputting a two-dimensional or three-dimensional position and direction, and a gravitation direction, each shown by a thick line frame in FIG. 14 are added to Step ST011 of inputting a mechanism condition.
   Incidentally, in FIG. 13, the external force pattern condition input unit 23 of FIG. 8 is omitted.
   Only ST011 is listed in Step ST001 of inputting use conditions in FIG. 14, and the other steps in FIG. 3 are omitted here.
   Moreover, also Step ST211 (FIG. 3) of performing storage as a subsystem model is omitted.

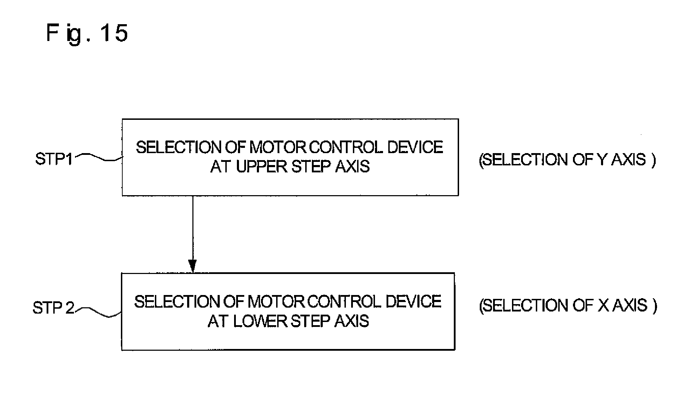

FIG. 15 is a diagram showing a two-axis motor control device selecting procedure according to the third embodiment of the present invention. The third embodiment performs processing through the procedure of Step STP1 of performing the setting of a motor control device at the upper step axis (Y axis) and successive Step STP2 of performing the setting of a motor control device at the lower step axis (X axis) as shown in FIG. 15.

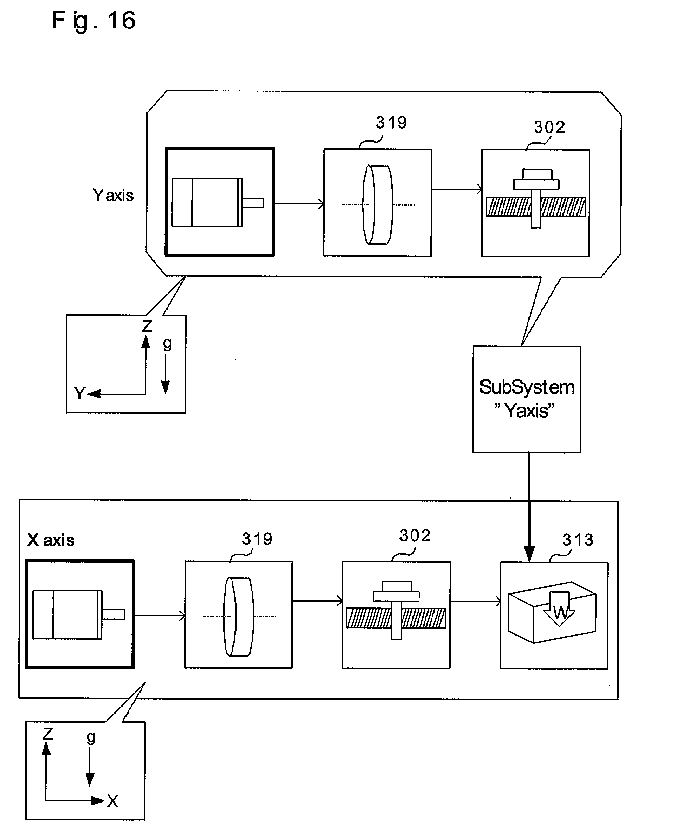

FIG. 16 is a view showing a subsystem model and a mechanism condition block input unit of the motor control device selecting apparatus according to the third embodiment of the present invention. In the drawing, the upper step shows a mechanism condition block input unit of the Y axis alone, and the subsystem model is configured so that weight is imposed on the X axis of the lower step by reusing the mechanism condition block input unit as a subsystem model. As a whole, FIG. 16 is a view showing the mechanism condition block input unit 33 (FIG. 13) of the X axis.
Both of the X axis and the Y axis take a configuration in which a coupling model 319, the horizontal model of a ball screw 302, and the load on the table are imposed. The coupling model 319 inputting a rotational motion and outputting a rotational motion and the horizontal model of a ball screw 302 inputting a rotational motion and outputting a translatory movement are connected.
Incidentally, the Y axis is input as an axis having a characteristic capable of editing the load on the table with the horizontal model of a ball screw 302, and the X axis defines the mass load model 313 and a subsystem model is input into the mass load model 313.
The selection of the Y axis is completed at Step STP1 (FIG. 15) of performing the setting of a motor control device of the upper step axis (Y axis). As for the Y axis, a motor control device is selected similarly to the first embodiment or the second embodiment. The model configuration of the Y axis is stored in the subsystem storage unit 34 (FIG. 13) as a subsystem model. The subsystem model of the Y axis includes the characteristic of the selected motor 1 (FIG. 7) here.
Next, Step STP2 (FIG. 15) of performing the setting of a motor control device in the lower step axis (X axis) is executed.
As for the X axis, the coupling model 319 and the horizontal model of a ball screw 302 are serially arranged in Step ST011 of inputting a mechanism condition as shown in FIG. 14 similarly to the Y axis, and the mass load model 313 is defined lastly. This is the procedure similar to that of the first embodiment or the second embodiment. After that, the subsystem model of the Y axis is called from the subsystem storage unit 34 (FIG. 13), and the subsystem model is set in the mass load model 313 so that the Y axis is made to be a load.
The setting of the Y axis as the load can be completed at Step ST411 (FIG. 14) of inputting a two-dimensional or three-dimensional position and direction and a gravitation direction.
A coordinate system and a gravitation direction are defined to the subsystem model of the Y axis in FIG. 16 as shown in the drawing so as to agree with the coordinate system of FIG. 12, and a coordinate system and a gravitation direction are also defined to the model of the X axis. Thereby, the mechanism configuration in which the whole Y axis is put on the table of the ball screw structure of the X axis can be input into the mechanism condition block input unit 33 (FIG. 13).
Since the input of the mechanism condition of the X axis has been completed, a motor control device meeting use conditions can be selected including options similarly to the first embodiment, the second embodiment, and the Y axis. The selection result can be recorded and saved in an electronic file and the like.
Because the computer 100 (FIG. 13) is connected to a network, an electronic file can be saved in another computer or output equipment through a LAN.

### [Example 4]

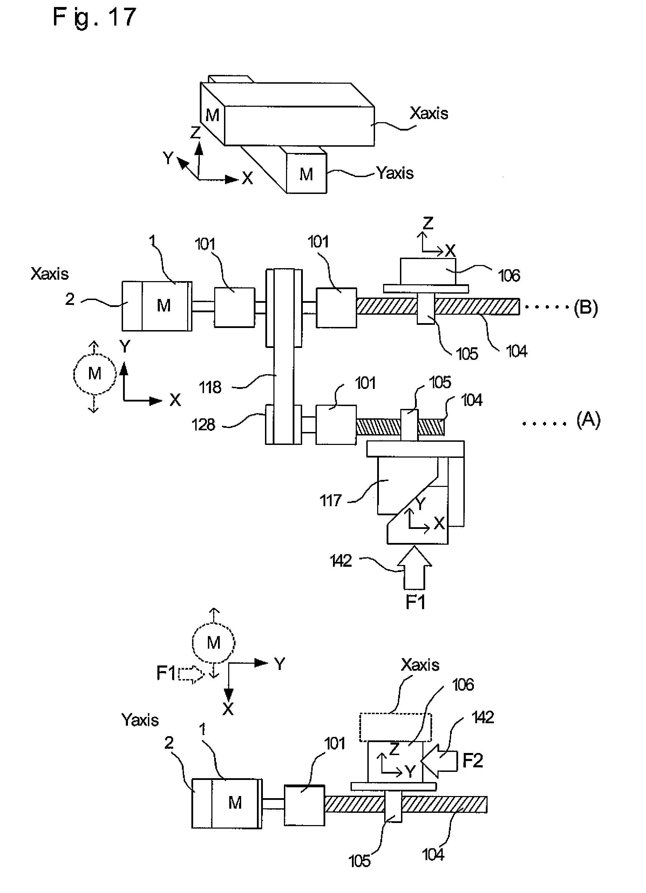

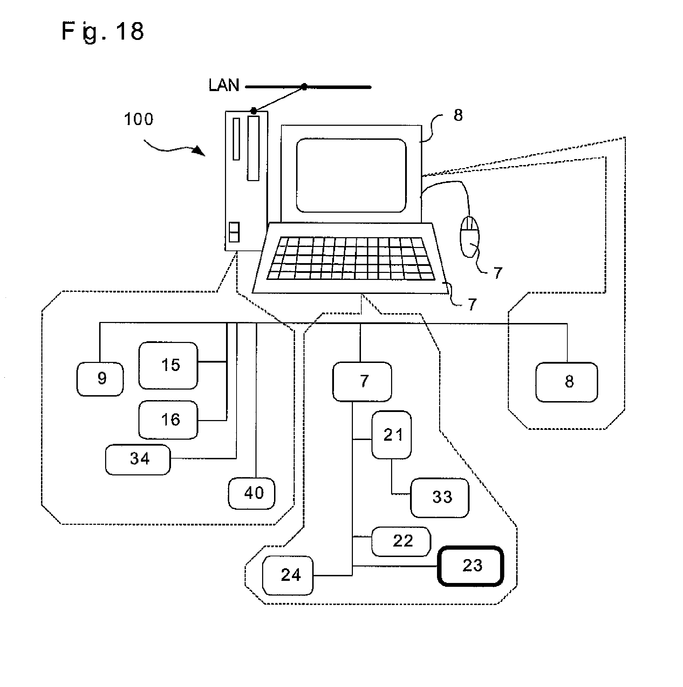

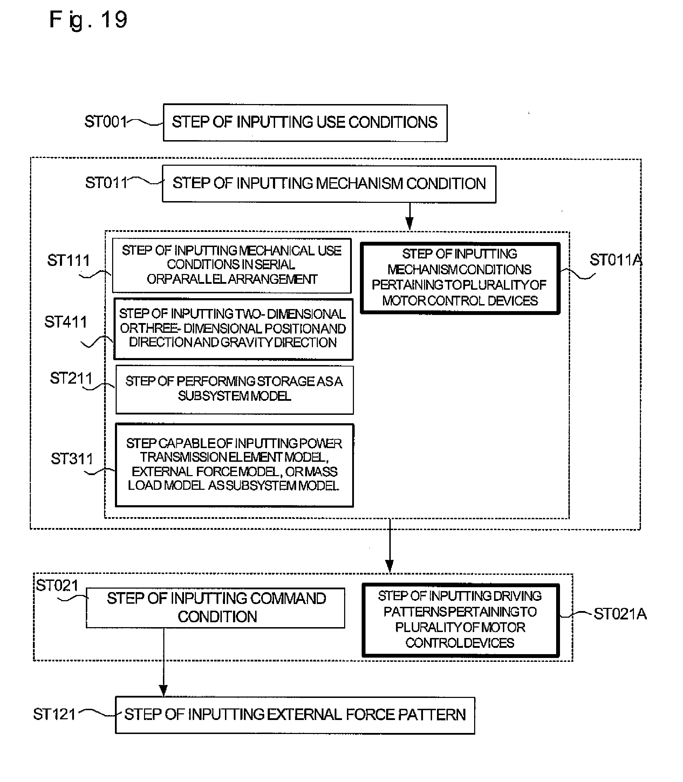

FIG. 17 is a view showing the configuration of a motor control device to be selected in a fourth embodiment of the present invention; FIG. 18 is a schematic configuration diagram of a motor control device selecting apparatus according to the fourth embodiment of the present invention; FIG. 19 is a step of inputting use conditions of a flow chart showing a motor control device selecting method according to the fourth embodiment of the present invention.
The motor control device to be selected in this embodiment has a configuration in which the X axis thereof is mounted on the Y axis thereof as shown in FIG. 17. The X axis includes two paths in parallel to each other. The two paths are a system (A) connected to the ball screw 104 with a belt 118 put between them and a system (B) in which the rotation axis of the belt 118 on the motor 1 side is connected to the ball screw 104. The path of (A) transforms a translatory movement to the X direction into the Y direction by a direction transformation mechanism 117, and further receives the external force F1. The path of (B) receives no external forces.
In the path transmitting a rotational motion, a coupling is attached to both the systems at a part at which parts are changed.
The fourth embodiment of the present invention differs from the third embodiment in (1) a point that the external force pattern condition input unit 23 is provided in FIG. 18 (similarly to the embodiment 2), and (2) a point of the above-mentioned configuration of the motor control device as shown in FIG. 17, especially the point of receiving an external force.
Moreover, because the present embodiment differs from the third embodiment, Step ST011A of inputting mechanism conditions pertaining to a plurality of motor control devices and Step ST021A of inputting driving patterns pertaining to a plurality of motor control device are added in FIG. 19.

As shown in FIG. 17, the mechanism is the one in which the external force F1 is multiplied to the transmission mechanism ranging to the X axis of the upper step in the Y direction and further the one in which the external force F2 is multiplied to the transmission mechanism ranging to the Y axis of the lower step in the Y direction, and consequently the external force F1 multiplied to the upper step in the Y direction influences the motor 1 of the Y axis of the lower step.
Accordingly, the method is made to the procedure of providing Step ST011A of inputting mechanism conditions pertaining to a plurality of motor control devices as shown in FIG. 19, and of inputting a one-axis mechanism condition in ST011A. Incidentally, the present embodiment is the multi-axis configuration and is in the situation in which the condition thereof is changed according to the definition of a direction, and accordingly ST011A is made to a step of setting ST411 after ST111 in ST011A.
Moreover, the method is similarly made to the procedure of providing Step ST021A of inputting driving patterns pertaining to a plurality of motor control devices, and of inputting a one-axis command condition in ST021A.
That is, the computer programs operating on the computer 100 (FIG. 18) are led to be used by changing their modes to the modes capable of performing the condition input of multi-axes at the same time.

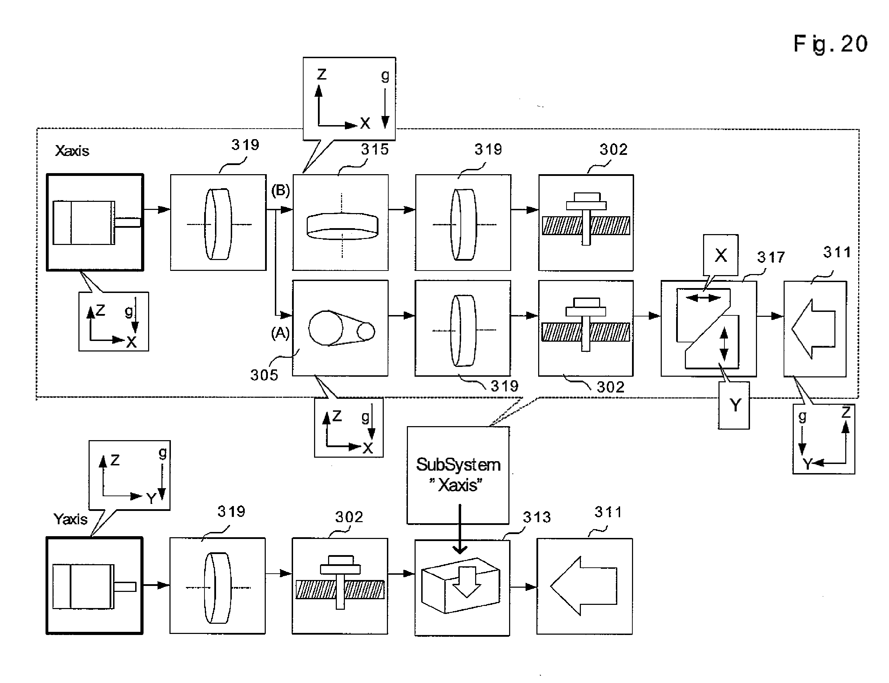

FIG. 20 is a view showing the mechanism condition block input unit 33 (FIG. 18) of the motor control device selecting apparatus according to the fourth embodiment of the present invention. Elements are put as models in accordance with FIG. 17.
At Step ST111 (FIG. 19) of inputting mechanical use conditions in serial or parallel arrangement, the following processing is performed.
The X axis is divided from the motor side into (A) and (B) through the coupling model 319.
In (A), the horizontal model of a belt pulley 305, the coupling model 319, the horizontal model of a ball screw 302, the translation direction transformation model 317, and the translation external force model 311 are arranged.
In (B), the rotating body model 315, the coupling model 319, and the horizontal model of a ball screw 302 are arranged. At the position where (A) and (B) are branched as the horizontal model of a belt pulley 305 and the rotating body model 315, respectively, the inertia moment of the pulley on the motor side is input into the rotating body model 315 in (B), and a speed reduction ratio and the inertia moment of the pulley on the load side are input into the horizontal model of a belt pulley 305 in (A), but the inertia moment on the motor side is made to 0.
About the Y axis, the coupling model 319, the horizontal model of a ball screw 302, and the mass load model 313 are put. The mass load model 313 is put so that the whole X axis is related. Furthermore the translation external force model 311 is arranged.
Incidentally, the coupling model 319, the rotating body model 315, and the horizontal model of a belt pulley 305 severally input a rotational motion and output a rotational motion. The horizontal model of a ball screw 302 inputs a rotational motion and outputs a translatory movement. The translation direction transformation model 317 inputs a translatory movement and outputs a translatory movement having a different direction. The translation external force model 311 ordinarily gives an external force into the output direction at the preceding stage. The mass load model 313 ordinarily gives the load of an external force to the output unit at the preceding stage in the gravitation direction.
Because the present embodiment is a multi-axis configuration and is under the situation in which the condition thereof changes according to the definition of a direction, the processing at Step ST411 of inputting a two-dimensional or three-dimensional position and direction and the gravitation direction is performed next.
The direction of the X axis in which the model of each element is arranged is assumed to X+, and the direction of the Y axis is similarly assumed to Y+.
Almost all of the added models are in the same direction, but the translation in the X direction is made to be transformed into the Y direction in the translation direction transformation model 317, which is in the (A) system in the X axis. Moreover, the translation external force model 311 after that is processed so that the external force F1 is added in the Y+ direction.
The model in each element in the X axis can be stored as a subsystem. The model is stored at Step ST211.
In the Y axis, processing is performed in the translation external force model 311 so that the external force F2 is added in the Y- direction.
At Step ST311 capable of inputting a power transmission element model, an external force model, or a mass load model as a subsystem model, the X axis stored as the subsystem model is processed on the mass load model 313 of the Y axis as a load mass similarly to the third embodiment.
The input into the mechanism condition block input unit 33 is performed in the way mentioned above, and Step ST011 of inputting a mechanism condition is completed.
The processing proceeds to Step ST021A of inputting driving patterns pertaining to a plurality of motor control devices. The driving pattern is input into each of the axes similarly to the first embodiment (FIG. 6). The input may be performed by inputting the position and speed of a motor or a load end with the command condition input unit 21. Two-systems of load ends exist as to the X axis, and either load end may be designated.

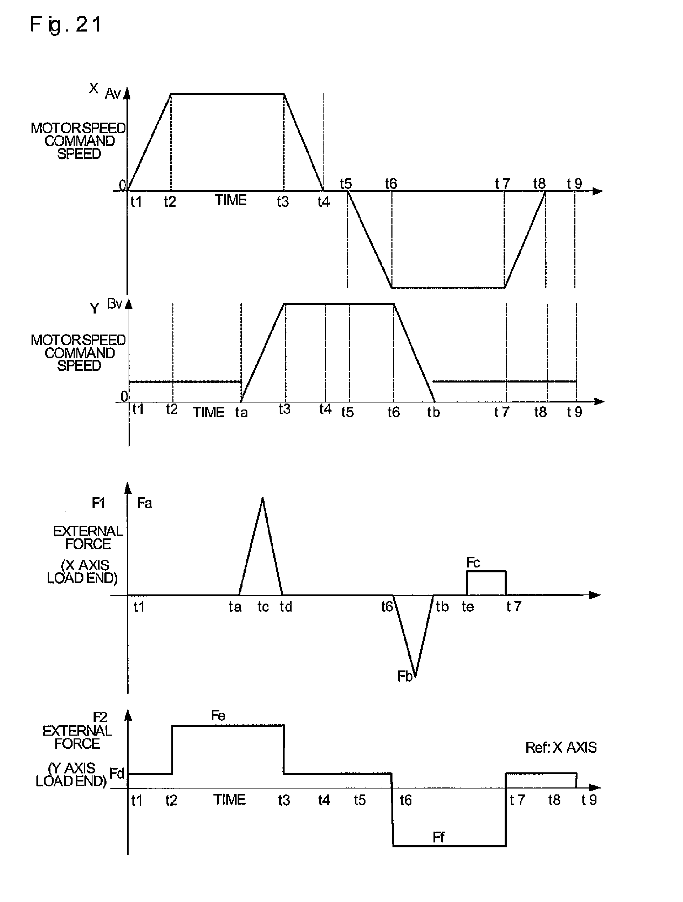

Next, Step ST121 (FIG. 19) of inputting an external force pattern is processed.
In the external force pattern condition input unit 23 (FIG. 18), a pattern of an external force is input as shown in FIG. 21. The external force may be set on the basis of the sections of the driving pattern similarly to the second embodiment, or a peculiar pattern may be input. In FIG. 21, a peculiar pattern is input as the external force F1 multiplied to the load end of the (A) system of the X axis, and external forces Fd, Fe, and Ff are set on the basis of the sections (t1, t2, t3, t6, t7, and t9) of the driving pattern of the X axis as the external force F2 multiplied to the Y axis.
Since the use conditions have been input in the way mentioned above, a motor control device can be selected similarly to the first embodiment, the second embodiment, and the third embodiment.
Although Step ST031 (FIG. 3) of inputting a specification condition of a motor control device is omitted in FIG. 19, the proceeding of the present embodiment may proceed through Step ST031.
The selection operation unit 9 (FIG. 18) internally performs an operation for selecting a motor control device in the upper step axis, as shown in FIG. 5 in the third embodiment, and next performs an operation for selecting a motor control device in the lower step axis.
In any event, a motor control device meeting use conditions can be selected including options even in case of multi-axes similarly to the first embodiment, the second embodiment, and the third embodiment.

### [Embodiment 5]

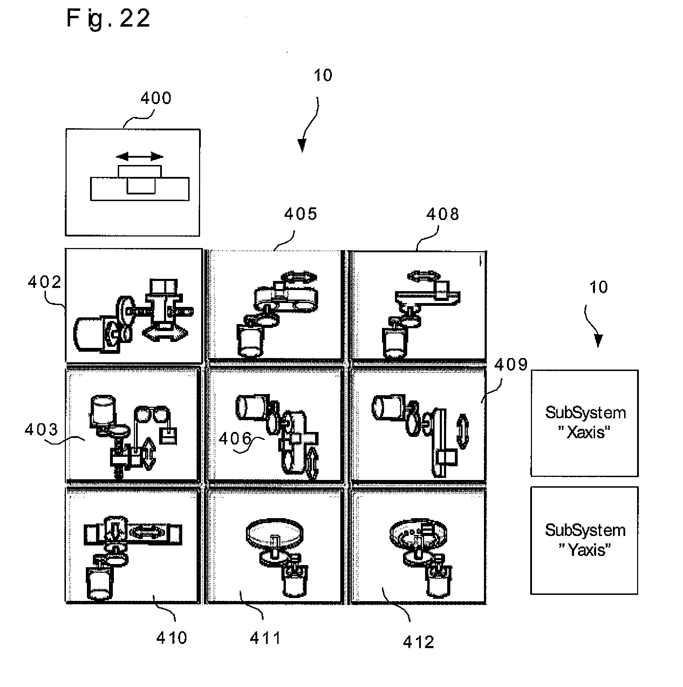

FIG. 22 is a view showing a subsystem model of a motor control device selecting apparatus according to a fifth embodiment of the present invention. In the drawing, 400 denotes a linear motor structure model; 402 denotes horizontal ball screw set model; 403 denotes a vertical ball screw set model; 405 denotes a horizontal timing belt/pulley set model; 406 denotes a vertical timing belt/pulley set model; 408 denotes a horizontal rack & pinion set model; 409 denotes a vertical rack & pinion set model; 410 denotes a roll feeder set model; 411 denotes a rotating body set model; 412 denotes a rotating table set model.
FIG. 4 of the first embodiment shows each element, having a basic configuration, of the mechanism condition block input unit 33, but the models denoted by 400-412 are subsystem models each including previously embedded several elements. For example, the horizontal ball screw set model 402 is a combination of the speed reduction element model 301 and the horizontal model of a ball screw 302. If a supplying side of a motor control device selecting apparatus has prepared subsystem models 10 each including previously embedded several elements in this way, then a user is not required to newly combine elements. Moreover, the models denoted by 400-412 and each element model may be combined. The combinations may be stored in the subsystem storage unit 34 as a new subsystem model 10.
As described above, the present embodiment can select a motor control device meeting use conditions including options similarly to the first embodiment, the second embodiment, the third embodiment, and the fourth embodiment.

### [Embodiment 6]

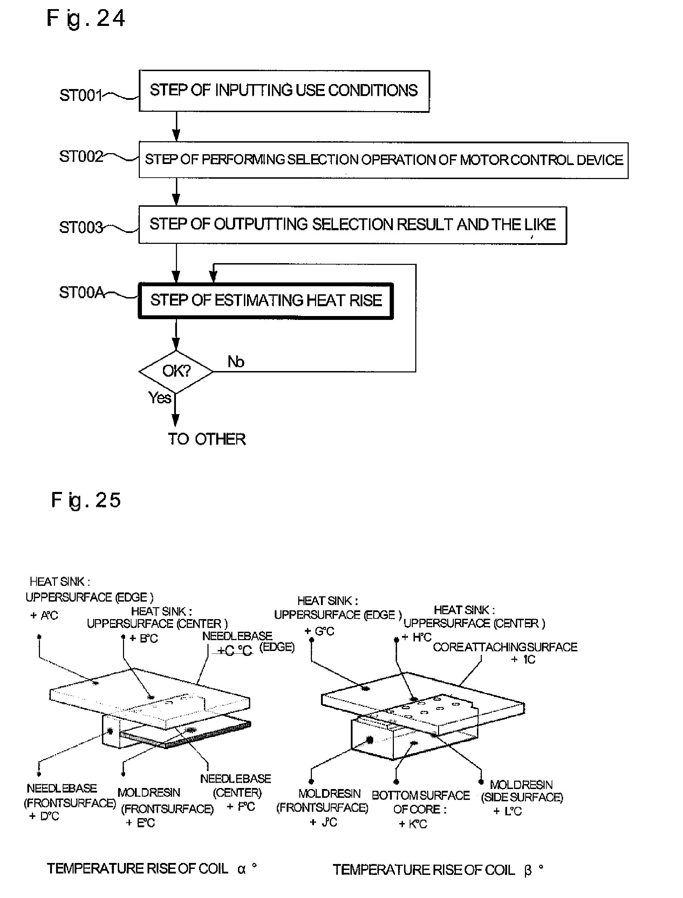

FIG. 23 is a schematic configuration diagram 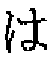 motor control device selecting apparatus according to a sixth embodiment of the present invention; FIG. 24 is an outline of a flow chart showing a motor control device selecting method according to the sixth embodiment of the present invention.
36 in FIG. 23 denotes a thermal analysis operation unit; ST00A in FIG. 24 denote a step of estimating a heat rise.
The present invention is different from the first to fifth embodiments in (1) a point that the present embodiment is provided with the thermal analysis operation unit 36 and (2) a point that Step ST00A of estimating a heat rise is added to the flow chart thereof.
The other configurations of FIG. 23 and the procedure of selecting a motor control device according to use conditions from ST001 to ST003 of FIG. 24 are similar to those of the other embodiments, and accordingly their duplicate descriptions are omitted. The details of Step ST001 of inputting use conditions are processed similarly to those of the other embodiments, their descriptions are omitted here.
FIG. 25 is a view showing estimations of heat rises with the thermal analysis operation unit according to the sixth embodiment of the present invention. FIG. 25 shows estimation views of heat rises of linear type motors, which are utilized by being embedded in peripheral machine portions and are frequently required to be subjected to the examinations of heat rises.
If the sizes and materials of heat sinks attached to needles of linear type motors and an ambient temperature as a reference are set, then the thermal analysis operation unit 36 can calculate the temperature rise of each part and the temperature rises of coils as shown in FIG. 25. As to the conditions for estimating the heat rises set here, Step ST001 (FIG. 24) of inputting use conditions may be configured to be able to omit known values in the step.
If a result of Step ST00A (FIG. 24) of estimating a heat rise cannot be satisfied, then a heat rise of another motor control device may be estimate again to repeat it. Moreover, the position of Step ST00A in the flow may be changed, and a temperature rise value may be set as a threshold value to add the selection condition of a motor control device at ST002 (FIG. 24). If ST00A has been completed, then the processing may proceed to the selection of options (ST004 of FIG. 3) as shown in the embodiment 1. Moreover, the selection result may be recorded (ST005 of FIG. 3).
Because the present embodiment configured as above, a motor control device meeting the use conditions can be selected including options in consideration of the rises of heat of the motor 1 similarly to the first to fifth embodiments.

### [Example 7]

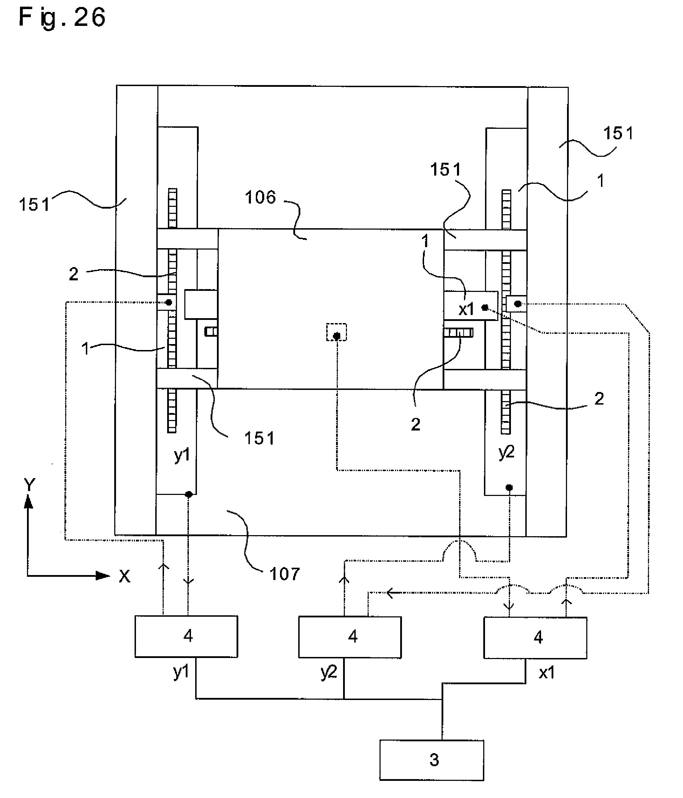

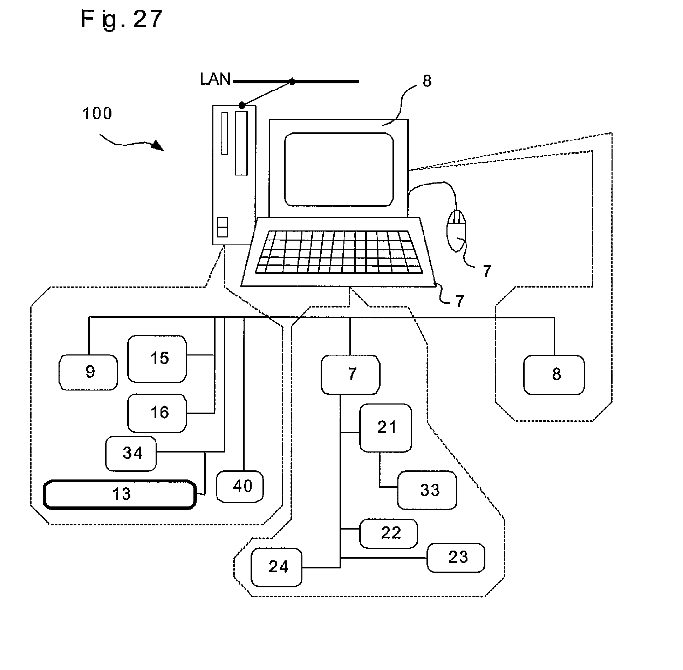

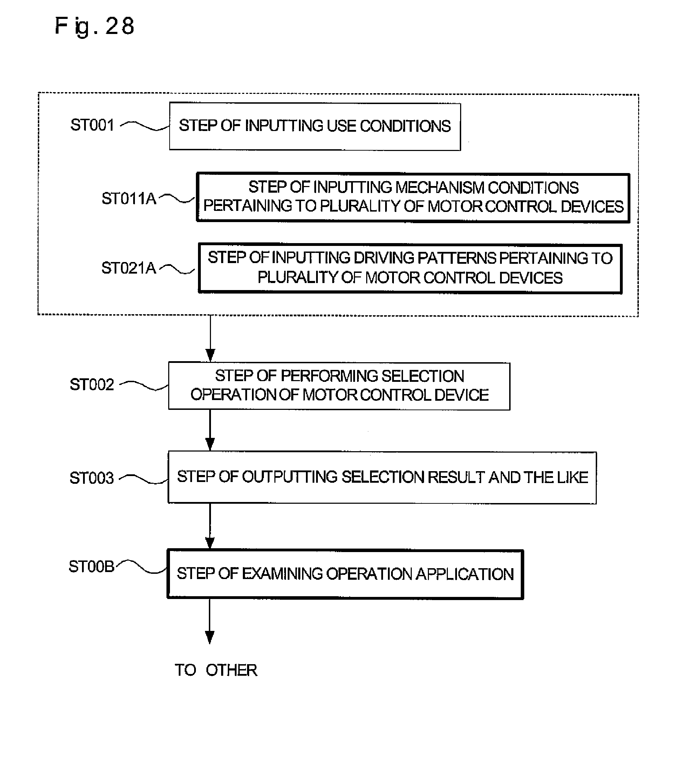

FIG. 26 is a view showing the configuration of a motor control device selected in a seventh embodiment of the present invention; FIG. 27 is a schematic configuration diagram of a motor control device selecting apparatus according to the seventh embodiment of the present invention; FIG. 28 is an outline of a flow chart showing a motor control device selecting method showing the seventh embodiment.
In FIG. 26 two controllers 4 control two linear type motors 1 and two detection units 2 in the Y direction, and one controller 4 controls one linear type motor 1 and one detection unit 2 in the X direction. The three controllers 4 is provided with a command unit 3 giving the two same commands to the Y axis and one command to the X axis. The X, Y directions are supported by a linear motion guide 151.
In FIG. 27, 13 denotes a command unit model. In FIG. 28, ST00B is a step of examining an operation application.
The present invention is different from the first to sixth embodiments in the point that the present invention is provided with the command unit model 13 of FIG. 27 and Step ST00B of examining an operation application of FIG. 28.
Moreover, the present invention is different from the other embodiments in the point that the present invention has the structure of performing a drive in the same one direction with the two linear type motors 1 in FIG. 26.
The present invention is composed of the two motors 1 for the Y axis, the one motor 1 for the X axis, and the mechanism for them. The point that two X and Y axes overlap each other is the same as the third and fourth embodiments.
As shown in FIG. 28, similarly to the fourth embodiment, Step ST001 of inputting used conditions is completed by Step ST011A of inputting mechanism conditions pertaining to a plurality of motor control devices and Step ST021A of inputting driving patterns pertaining to a plurality of motor control devices.
After that, the processing proceeds up to Step ST003 of outputting a selection result and the like similarly to the other embodiments, and the processing may select options as the first embodiment.

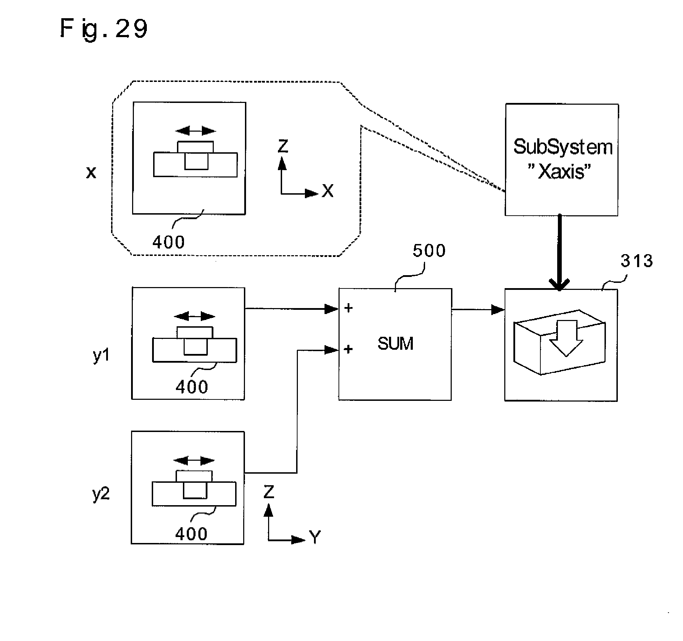

Since FIG. 26 is different from the structures of the other embodiments, the mechanism condition block input unit 33 of FIG. 27 will be described. FIG. 29 is a view showing a mechanism condition block input unit of the motor control device selecting apparatus according to the seventh embodiment of the present invention. In the drawing, 500 denotes a summation model. In the seventh embodiment, the thing required is to arrange the configurations pertaining to a plurality of motors similarly to the fourth embodiment. The linear motor structure model 400 of FIG. 29 outputs a translatory movement. The output of the summation model 500 is a movement direction of inputs, and outputs a summation of a plurality of inputs. The mass load model 313 ordinarily gives the load of an external force to the output unit at the preceding stage in the gravitation direction.
First, the X axis of the upper step is set as X and the linear motor structure model 400 is selected before the lower step similarly to the third and fourth embodiments. The table of the X axis and the mass of the mass load 106 (FIG. 26) are added to the characteristics of the linear motor structure model 400. Then this is stored in the subsystem storage unit 34 (FIG. 27) as a subsystem model.
Next, the structure of the lower step is examined. Because the present embodiment has the structure of performing a drive into the same direction with the two linear type motors 1, the linear motor structure model 400 is selected at y1 and y2, and the summation model 500 of summating the driving forces into the rectilinear propagation is put to be connected to the mass load model 313. Since the structure of the upper step becomes a load, the mass load model 313 is processed to have a subsystem model as a load. Moreover, the mass of the fixed part in the X axis is separately added to the mass load model 313. After that, input is performed similarly to the fourth embodiment.

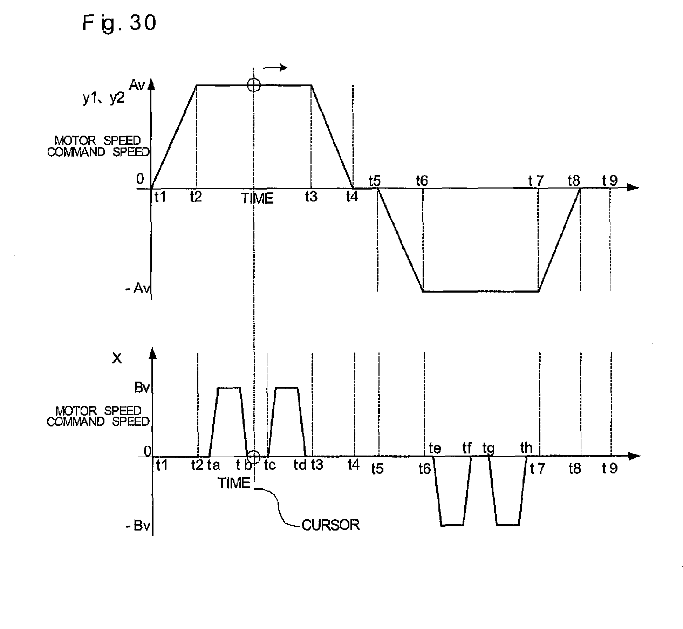

FIG. 30 is a diagram showing usage examples of a command condition input unit inputting a multi-axis driving pattern of the motor control device selecting apparatus according to the seventh embodiment of the present invention and a command unit model.
At Step ST021A (FIG. 28) of inputting driving patterns pertaining to a plurality of motor control devices, the driving pattern is set by the command condition input unit 22 of FIG. 27 here as shown in FIG. 30 similarly to the fourth embodiment. Because y1 and y2 perform the same movements, the driving patterns are the same ones.
If the input of the use conditions has been completed, a motor control device can be selected similarly to the fourth embodiment.
If a motor control device can be selected, Step ST00B of examining the operation application newly shown in FIG. 28 can be processed.
The command unit model 13 of FIG. 27 provided by the present embodiment has a function capable of imitating the actual command unit 3 (FIG. 26). The command unit 3 performs the sequence control of the controller 4 according to input and output signals and the like, which are separately given. The actual command unit 3 is needed to produce a sequence for this sort of operation application as a program. It is known by the execution of a compiler whether a sequence program makes sense as a program language or not, but it cannot be known until a real machine is operated how the command unit 3 is actually controlled.
However, Step ST00B of examining an operation application in FIG. 28 can imitate the operation process of a motor by pursuing the operation process with a cursor as shown in FIG. 30, ascertaining the sequence program. Because the operation process can be imitated while checking input and output signals and the like, the debugging of a sequence program can be also performed.
If the insufficiency of the performance of a motor, and the functions of a controller and a command unit, such as the insufficiency of the maximum speed and the maximum torque (thrust), as the application of the whole body, is caused in the operation of imitating the operation processes, or if the motor, the detection unit, the controller, and the command unit which have been selected by the examination of an application are overspecification, then it is also possible to return to Step ST001 of inputting use conditions in FIG. 28 to perform reselection.
A motor control device meeting use conditions can be selected in this way. Moreover, after the entire operation application has been examined, the propriety of a selected motor control device can be evaluated.

### [Embodiment 8]

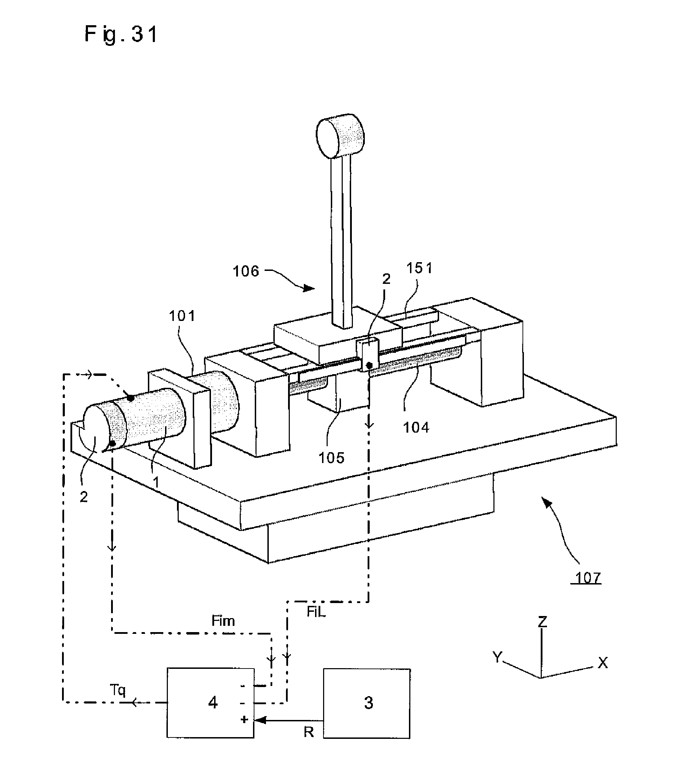

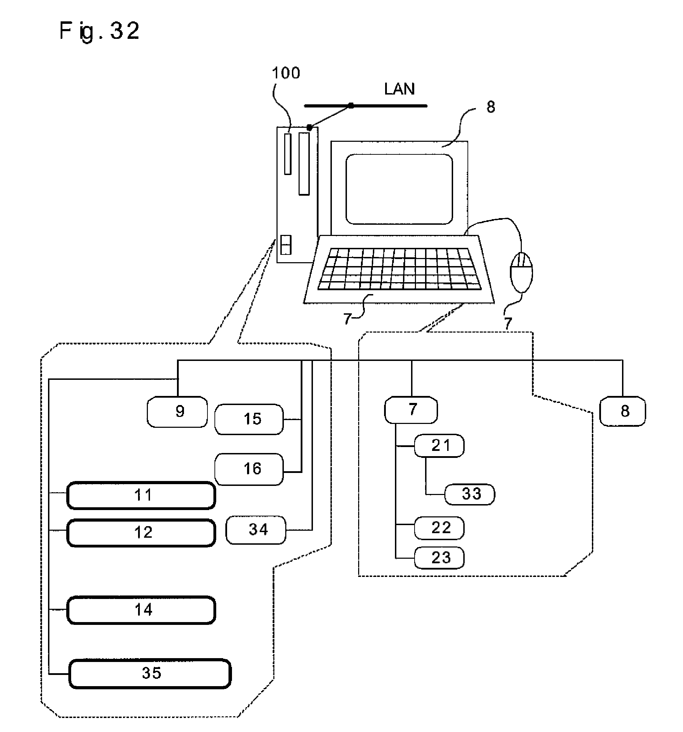

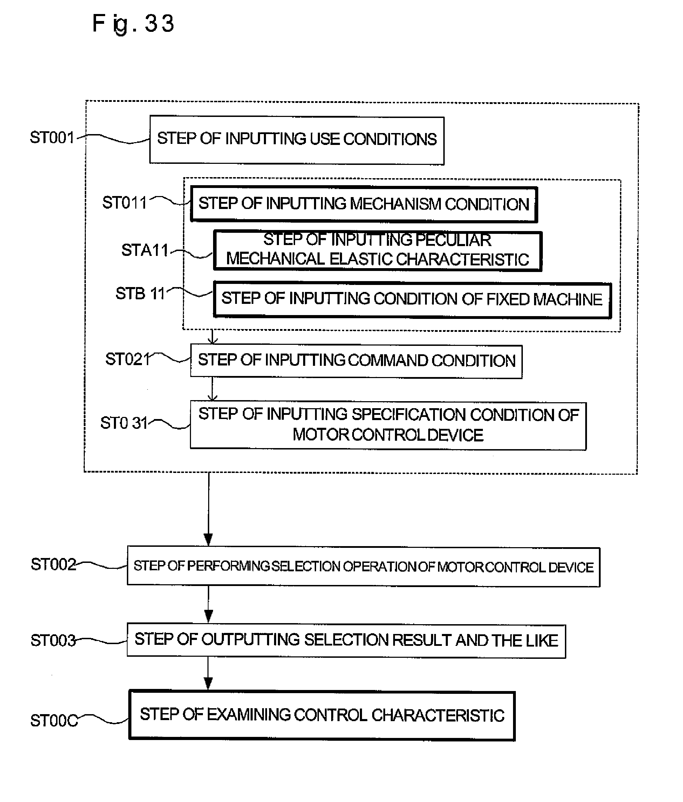

FIG. 31 is a view showing the configuration of a motor control apparatus to be selected in an eighth embodiment of the present invention; FIG. 32 is a schematic configuration diagram of a motor control device selecting apparatus according to the eighth embodiment of the present invention; FIG. 33 is an outline of a flow chart showing a motor control device selecting method according to the eighth embodiment of the present invention.
As shown in FIG. 31, a motor control device to be selected has a ball screw configuration, the upside of a table 106 and a machine stand unit 107 have elastic structures. Moreover, also the table 106 is provided with the detection unit 2, and the motor control device takes a full closed configuration.
In FIG. 32, 11 denotes a motor model; 12 denotes a detection unit model; 14 denotes a controller model; 35 denotes a mechanism analysis operation unit. In FIG. 33, STA11 is a step of inputting a peculiar mechanical elastic characteristic; STB11 is a step of inputting a condition of a fixed machine; ST00C is a step of examining a control characteristic.
The present embodiment is different from the other embodiments in the point of providing the motor model 11, the detection unit model 12, the controller model 14, and the mechanism analysis operation unit 35 in FIG. 32. Moreover, the present embodiment is different from the other embodiments in the point of providing Step STA11 of inputting a peculiar mechanical elastic characteristic, Step STB11 of inputting a condition of a fixed machine, and Step ST00C of examining a control characteristic in FIG. 33. Furthermore, the present embodiment is different from the other embodiments in the point of including a machine having an elastic characteristic in a motor control device of an object as shown in FIG. 31.
Incidentally, a characteristic point of the present embodiment is Step ST00C of examining a control characteristic in FIG. 33. A characteristic point is the point of performing a response simulation of a motor control device.
In addition, although the other embodiments use the mode of each element shown in the mechanism condition block input unit 33, the method of using the model of each element is different from those of the other embodiments.

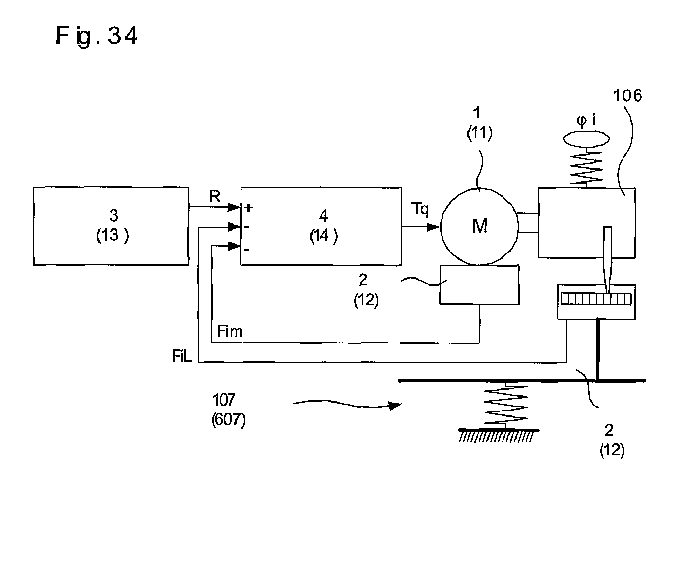

FIG. 34 is a simplified configuration diagram and model diagram of the motor control device showing the eighth embodiment of the present invention, and is the one shown by simplifying the configuration of FIG. 31. The motor 1 (motor model 11) is connected to the table by rigid body connection, and has an elastic load in addition to the table. Also the motor 1 (motor model 11) and the machine stand unit 107 (machine stand unit model), which is a supporting fixed part on the load side, have elastic bodies.
The motor control device is a full closed system, and includes the detection unit 2 (detection unit model 12) on each of the motor 1 (motor model 11) and the table on the load side. The motor control device returns feedback signals Fim and FiL to the controller 4 (controller model 14), and performs control to agree with a command R of the command unit 3 (command unit model 13).
Accordingly, at Step ST011 of inputting a mechanism condition in Step ST001 of inputting use conditions in FIG. 33, processing is performed by at both of Step STA11 inputting a peculiar mechanical elastic characteristic and Step STB11 of inputting a condition of a fixed machine.

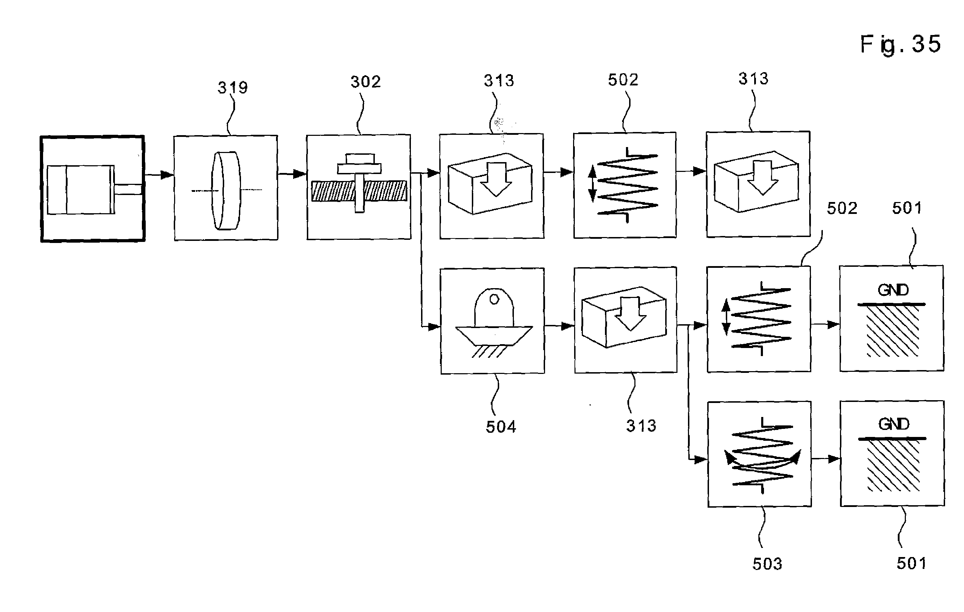

FIG. 35 is a view showing a mechanism condition block input unit of the motor control device selecting apparatus according to the eighth embodiment of the present invention. In order to input a mechanical section of FIG. 34 with the mechanism condition block input unit 33, the coupling model 319, the horizontal model of a ball screw 302, the mass load models 313, a bearing supporting side model 504, translation spring models 502, a rotating spring model 503, and ground models 501 are used.
The coupling model 319, the horizontal model of a ball screw 302, and the mass load models 313 are used similarly to those in the other embodiments.
The bearing supporting side model 504 is a component regardless of the load driven by a motor, and produces a path to the machine stand unit (107 in FIG. 31) on the supporting side of the motor and the ball screw.
The translation spring models 502 each have X, Y, and Z three-direction spring elements, and can input and edit the values of the spring elements separately. The translation spring models 502 connect the outputs of the preceding stages and the outputs of the subsequent stages, and are ordinarily used between the mass load models 313.
The rotating spring model 503 has spring elements in three directions around X, Y, and Z, and can separately input and edit the values of the spring elements. The rotating spring model 503 connects the output of the preceding stage and the output of the subsequent stage, and is ordinarily used between the mass load models 313.
Moreover, an attenuation characteristic can be set to the translation spring models 502 and the rotating spring model 503 separately besides the set directions of the springs.
Incidentally, the translation spring models 502 and the rotating spring model 503 may be applied as the models having spring elements of in three directions of X, Y, and Z and around three directions of X, Y, and Z individually. The translation spring models 502 and the rotating spring model 503 may be produced by collecting spring element models of individual three directions of translation and rotation to configure a subsystem model. Each of the ground models 501 indicates a mechanical fixed surface, and receives a movement, a force, torque, and the like in each of a rotation and a rectilinear propagation, but performs no output. The ground models 501 are true fixed surfaces on the models.

The model of each element arranged in the upper step of FIG. 35 is a load driven by a motor. Element models are arranged up to the table on the ball screw nut 105 side similarly to the other embodiments. Because the configuration includes a spring mass element on the table as shown in FIGS. 31 and 34, the translation spring model 502 and the mass load model 313 are arranged.
The model of each element arranged in the lower step of FIG. 35 is independent of the load which a motor drives.
The bearing supporting side model 504 is arranged after the horizontal model of a ball screw 302 here. The bearing supporting side model 504 does not inherit the output of the ordinal horizontal model of a ball screw 302, but inherits the characteristic of the horizontal model of a ball screw 302 on fixed supporting side. Incidentally, if the bearing supporting side model 504 is parallely arranged after the coupling model 319, that arrangement has a similar meaning, and inherits the characteristic of the rotation axis on the fixed supporting/bearing side.
The mass load model 313 arranged after the bearing supporting side model 504 is subjected to the modelization of the upper side of the machine stand unit 107 of FIG. 31, and means that fixed supporting/bearing has a mass load. The translation spring model 502 and the rotating spring model 503 are parallely arranged successively to this, and each of them is connected to the ground model 501. If the spring of the machine stand unit 107 in FIG. 34 has translation/rotation, then the load on the machine stand unit and the true fixed surface of the model are coupled to the translation spring model 502 and the rotating spring model 503.

As shown in FIG. 33, when Step ST011 of inputting a mechanism condition is completed, the processing proceeds to Step ST021 of inputting a command condition and Step ST031 of inputting a specification condition of a motor control device similarly to the other embodiments, and ends the step of inputting use conditions.
Moreover, the processing proceeds from Step ST002 of performing a selection operation of a motor control device to Step ST003 of outputting a selection result and the like similarly to the other embodiments.
Thereby, a motor control device meeting use conditions can be selected similarly to the other embodiments.
The characteristic matter of the present embodiment is Step ST00C of examining a control characteristic. The elastic body spring element and the characteristic of a fixed machine, which have been input at Step ST011 of inputting a mechanism condition, are utilized here. Moreover, in order to solve an equation of motion in consideration of an elastic body spring element, the mechanism analysis operation unit 35 shown in FIG. 32 is used.
Moreover, since the motor control device selecting apparatus is equipped with the motor model 11, the detection unit model 12, and the controller model 14, which are shown in FIG. 32 and is furthermore equipped with the machine configuration shown in FIG. 35, the motor control device selecting apparatus has the model of the motor control device shown in FIG. 34.

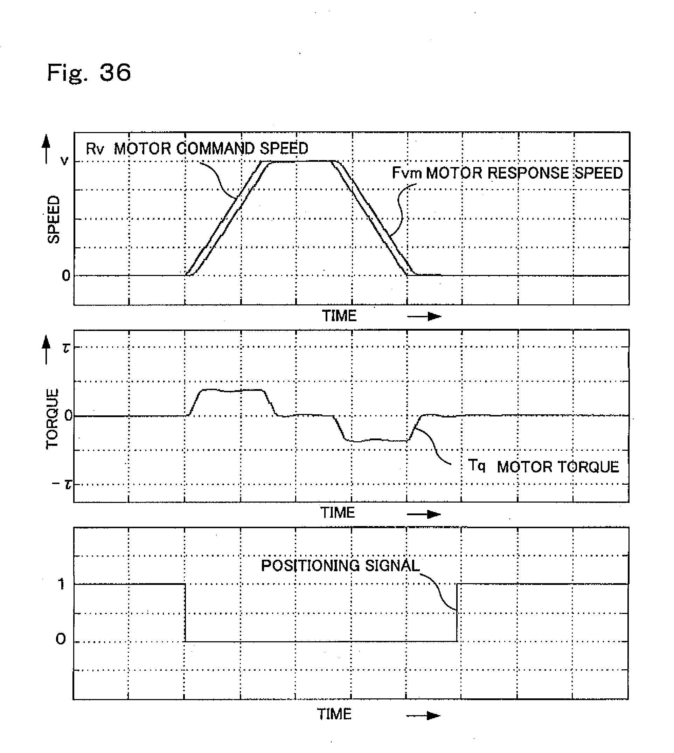

FIG. 36 is a diagram showing simulated responses by a controller model of the motor control device selecting apparatus according to the eighth embodiment of the present invention.
By the use of the motor model 11 (FIG. 32) of a selected motor control device, the detection unit model 12 (FIG. 32), and the controller model 14 (FIG. 32), or the capability of changing/editing of a gain parameter for changing the responsibility of the controller model 14, the response simulation of the motor control device as shown in FIG. 36 can be performed. Moreover, it is also possible to perform a waveform display of the load end (φi of FIG. 34) of the table and load 106. It is also possible to perform a waveform display of an arbitrary point without being limited to the load end φi.
Because a response of a motor control device can be ascertained in advance in consideration of the influence of a mechanical elastic spring element, if the performances of a motor, such as the maximum speed thereof and the maximum torque (thrust) thereof and the functions of a controller and a command unit are insufficient, or if the motor, the detection unit, the controller, and the command unit which have been selected by the examination by the response simulation are under overspecification, then the processing can return to Step ST001 of inputting use conditions shown in FIG. 33 to perform a reselection, or the processing can return to Step ST031 of inputting a specification condition of a motor control device to perform a reselection by changing the method of the selection and the narrowing-down of a motor control device.

### [Embodiment 9]

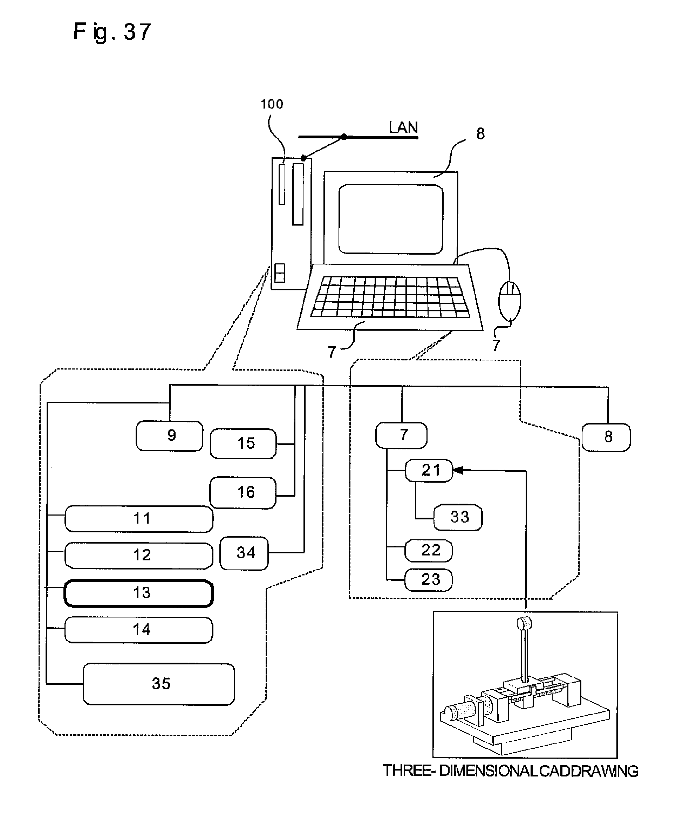

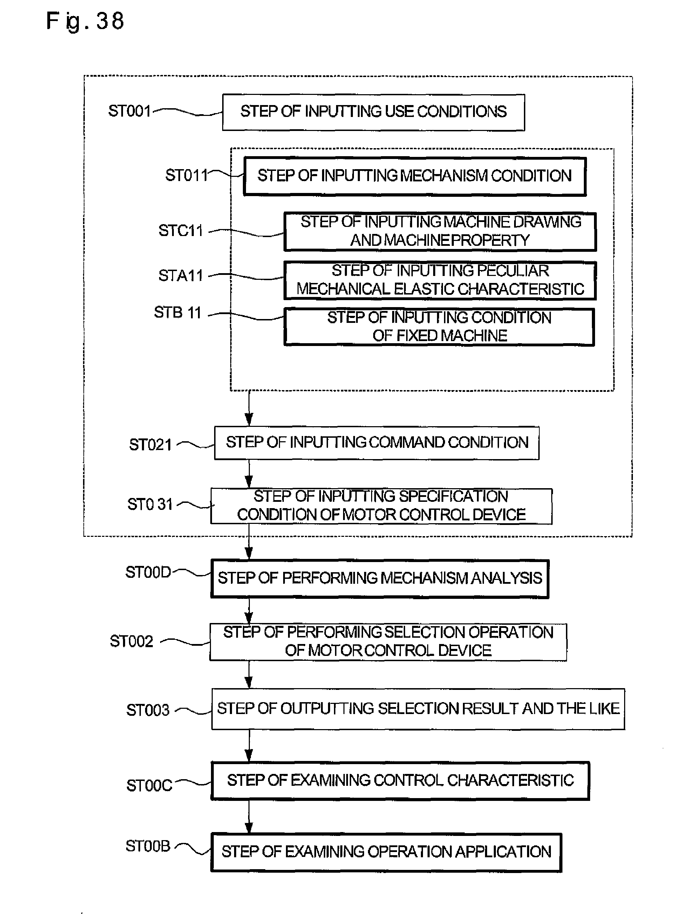

FIG. 37 is a schematic configuration diagram of a motor control device selecting apparatus according to a ninth embodiment of the present invention, and FIG. 38 is an outline of a flow chart showing a motor control device selecting method according to the ninth embodiment of the present invention. The configuration of the selected motor control device is the same as that of the eighth embodiment in FIG. 31.
FIG. 37 shows the configuration of adding the command unit model 13 to FIG. 32 of the eighth embodiment.
Although listing is partially omitted, FIG. 38 has the configuration of adding Step STC11 of inputting a machine drawing and a machine characteristic, Step STOOD of performing mechanism analysis, and Step ST00B of examining an operation application to FIG. 33 of the eighth embodiment.
Incidentally, the characteristic matters of the present embodiment are (1) the point of capturing a three-dimensional drawing and a result of a finite element method and (2) the point of adding a spring element to enable a response simulation of a motor control device more minutely than the eighth embodiment. Furthermore, the characteristic matters of the present embodiment also reside in the point capable of ascertaining Step ST00B of examining an operation application, which is similar to the seventh embodiment, by means of a three-dimensional animation.
Step ST011 of inputting a mechanism condition of FIG. 38 performs the processing thereof by the use of each of Step STC11 of inputting a machine drawing and a machine characteristic, Step STA11 of inputting a peculiar mechanical elastic characteristic, and Step STB11 of inputting a condition of a fixed machine similarly to the eighth embodiment.
At Step STC11 of inputting a machine drawing and a machine characteristic, a three-dimensional machine drawing (three-dimensional CAD) and a machine characteristic belonging to the three-dimensional machine drawing can be input from the mechanism condition input unit 21 (FIG. 37).
The three-dimensional CAD therein reads an electronic file which has been produced at the time of performing a mechanical design with a three-dimensional CAD tool, which is another computer program. Moreover, if the three-dimensional CAD includes a condition on a supporting and fixing side which is not driven by a motor, also Step STB11 of inputting a condition of a fixed machine is led to be processed. Furthermore, also a part the natural frequency and the vibration mode of which have been calculated by the finite element method (FEM) on the basis of three-dimensional CAD can be input from the mechanism condition input unit 21 at Step STA11 of inputting a peculiar mechanical elastic characteristic. Incidentally, the machine characteristic may be edited to an individual part after inputting the three-dimensional CAD.

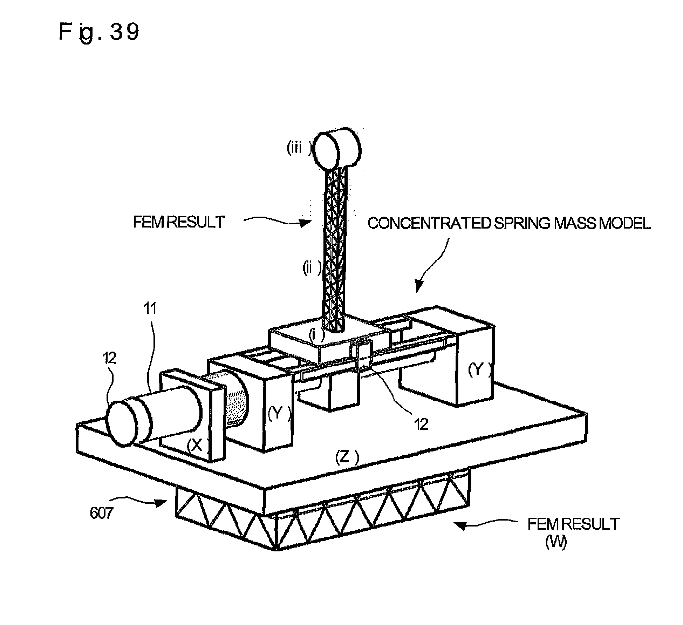

FIG. 39 is a view showing a result of a three-dimensional CAD and the FEM of a motor control device according to the ninth embodiment of the present invention. The result of the three-dimensional CAD and the FEM is captured from the mechanism condition input unit 21, and the three-dimensional shape as shown in FIG. 39 is obtained.

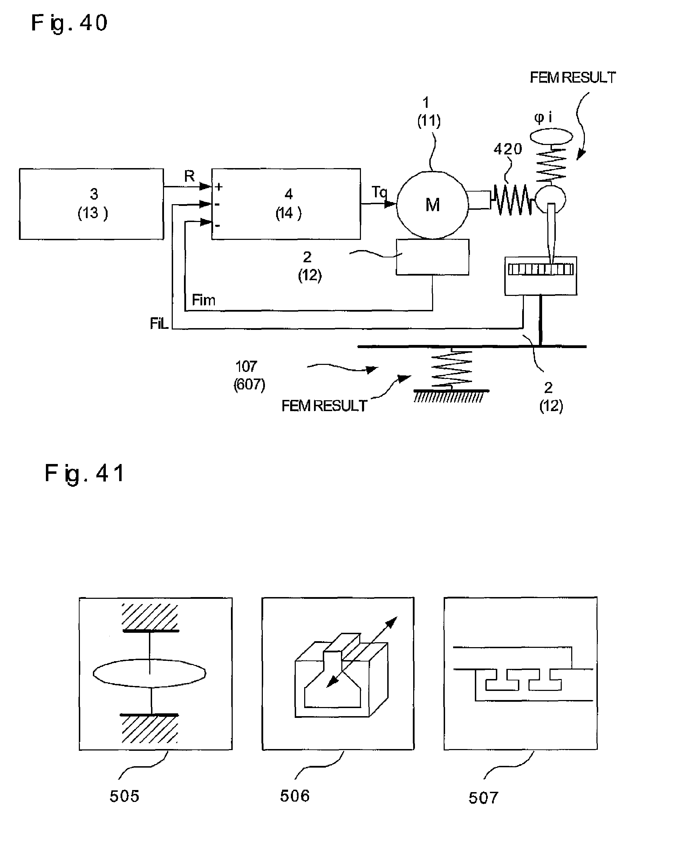

FIG. 40 is a simplified configuration diagram and model diagram of the motor control device according to the ninth embodiment of the present invention.
FIG. 40 is different from FIG. 34 of the eighth embodiment in the point of adding a spring element 420 to the load to be driven by the motor 1 (motor model 11) in comparison with FIG. 34. In the configuration of FIG. 34, the detection unit 2 detects the feedback Fim (motor side) and FiL (load side), which are different from each other only in transformation elements, such as a rotation direct action and a speed reduction ratio, even if the motor control device is made to have a full closed configuration, and the detection unit 2 performs control.
In FIG. 40, it is assumed that one spring element is put between a ball screw nut and a table in consideration of the rigidity (elastic elements) of a ball screw and the ball screw nut. Thereby, the response simulation of a motor control device close to a real machine can be finally performed.
The processing at Step ST011 of inputting a mechanism condition for this sake is described. The three-dimensional CAD and the FEM result obtained as shown in FIG. 39 are obtained as a part, and have a shape and a weight, but have not the characteristic of the element.
As the characteristic of the element, the model of each element shown in the mechanism condition block input unit 33 (FIG. 37) of the other embodiments is used. Incidentally, the method for using the model of each element is different from those of the other embodiments. Furthermore, there is a model of newly necessary element.
FIG. 41 is a view showing mechanism condition input units of the motor control device according to the ninth embodiment of the present invention. In FIG. 41, 505 denotes a rotation restriction model; 506 denotes a translation restriction model; 507 denotes a fixing model. These models are used together with the model of each element used in the other embodiments.
The model of each element having no physical shapes and weights is added to the part of the three-dimensional CAD and FEM result obtained as FIG. 39, and connection forming between parts is performed.
Moreover, the motor model 11 (FIG. 37) is a part selected from this, and a definition to a temporary motor model 11 is performed to parts. The definition can be completed by registering each part in the motor model 11.
Owing to the rotation motor, the rotation restriction model 505 shown in FIG. 41 is used to the motor model 11, a coupling unit, or a ball screw unit. The rotation restriction model 505 makes a part and a part be in rotation restriction at a certain position in a certain direction. One part may be the ground model 501, setting can be performed by the characteristic in the inner part of the rotation restriction model 505 without using the new ground model 501.
For example, a coupling unit (101 in FIG. 31) is made to be under the rotation restriction with a flange portion ((X) in FIG. 39) in the direction and at the position which are the same as those of the rotation center of a motor.

Next, if the coupling unit, the motor model 11, and the ball screw (104 in FIG. 31) are fixed with the fixing model 507 shown in FIG. 41, then each of them has the degree of freedom of a rotation by the rotation restriction model 505. The fixing model 507 performs the complete restriction between parts. One part may be the ground model 501 (FIG. 35) similarly to the rotation restriction model 505.
The parts of a ball screw and a ball screw nut (105 in FIG. 31) are subjected to the formation of a correlation by the horizontal model of a ball screw 302 (FIG. 4) shown in the embodiment 1 and the like. The horizontal model of a ball screw 302 performs the motion transformations of the ball screw portion and the ball screw nut portion from rotations to rectilinear propagations at the pitch of the horizontal model of a ball screw 302. The thing required is registering the parts and determining the characteristics of the horizontal model of a ball screw 302, such as the pitch thereof and the direction thereof. Incidentally, because the gravity is separately considered and only the formation of a mechanical correlation is performed, the vertical model of a ball screw 303 may be used.
Furthermore, the ball screw nut or the table unit gives the degree of freedom of a translation to linear motion guide portion (in one body with (Y) of FIG. 39) and a linear motion direction in the translation restriction model 506 shown in FIG. 41. The translation restriction model 506 registers parts, and gives the degree of freedom in the linear motion direction.
The ball screw nut and the table unit ((i) in FIG. 39) are correlated with each other by the translation spring model 502 shown in FIG. 35 of the eighth embodiment. A value at which the spring element only influences the ball screw nut and the moving direction of the table is input, and the other directions are restricted. Incidentally, a very large rigidity value may be input.
The translation spring model 502 joins a part with another part with a spring element. One part may be the ground model 501.
Furthermore, each part of the table unit (i), a beam portion ((ii) in FIG. 39) obtaining the FEM result, and the beam portion ((ii) in FIG. 39) obtaining the FEM result and a load end portion ((iii) in FIG. 39) are completely fixed to each other by the use of the fixing model 507.
By the processing described above, the formation of the correlation of the parts driven by the motor is completed. The flange portion (X) is defined regardless of the drive of the motor.
Incidentally, fixing processing on the flange side is necessary in order to perform strict utilization. If the ground model 501 and the coupling unit are correlated with each other by the rotation restriction model 505 in place of the flange portion (X), the formation of the correlation of the parts driven by the motor is completed, and easy utilization becomes possible.

Next, the correlations between the flange portion(X), the linear motion guide portion (Y), and the machine stand unit models (Z) and (W) in FIG. 39 are perform. In order that these may become the models of FIG. 40, the fixing model 507 shown in FIG. 41 is used. Although the translation spring models 502 and the rotating spring model 503 are used as shown in FIG. 35 in the eighth embodiment, The FEM result (W) is used in a part of the machine stand unit model as shown in FIG. 39 in the present embodiment.
The part of the flange portion(X) and the linear motion guide portion (Y) are completely fixed to the part of the machine stand unit model (Z) by the use of the fixing model 507.
If the linear motion guide portion (Y) has not been an integrated part with the flange portion (X) in advance, their parts are similarly completely fixed by the use of the fixing model 507.
Moreover, the part of the machine stand unit models (Z) and (W), and the part of the machine stand unit model (W) and the ground model 501 are similarly completely fixed by the use of the fixing model 507.
Incidentally, the coupling of the (W) and the ground model 501 may be the coupling with the ground model 501 by the inner part setting of the fixing model 507.
Many division points of the FEM result and a part by the FEM are connected to the part on the coupling side at their positions. Each pair of (ii) and (i), (ii) and (iii), (W) and (Z), and (W) and the ground model 501 in FIG. 39 is coupled together by the use of the fixing model 507.
Incidentally, an attenuation characteristic can be separately set to the translation spring model 502 and the rotating spring model 503 by the set direction of the springs. An attenuation characteristic can be separately set to the FEM result by the natural frequency and the vibration mode.

Step ST011 of inputting a mechanism condition of FIG. 38 is completed in the way mentioned above, and the model including the elastic body as shown in FIGS. 39 and 40 is produced. Consequently, the processing proceeds to Step ST021 of inputting a command condition and Step ST031 of inputting a specification condition of a motor control device similarly to the other embodiments, and the processing ends the step of inputting the use conditions.
Although the processing in the other embodiments proceeds to Step ST002 of performing a selection operation of a motor control device after that, because the processing of the present embodiment has only performed the formation of a mechanical correlation of the mechanism condition to the three-dimensional CAD and the FEM result, the processing of the present embodiment proceeds to Step STOOD of performing a mechanism analysis before ST002.
At Step STOOD of performing a mechanism analysis, the movement of a part is analyzed by a defined driving pattern on the basis of the mechanism condition defined in the present embodiment, and a force generated by an operation is calculated at any time. Moreover, a movement is analyzed in cooperation with an FEM result in consideration of a part deformation. The mechanism analysis operation unit 35 shown in FIG. 37 is used.
Because the treatment similar to those of the other embodiments if the analysis of a movement can be done, the processing proceeds from Step ST002 of performing a selection operation of a motor control device to Step ST003 of outputting a selection result and the like, and a motor control device meeting use conditions can be selected.

In the present embodiment, the processing can proceeds to Step ST00C of examining a control characteristic of FIG. 38 similarly to the eighth embodiment. The FEM result input at Step ST011 of inputting a mechanism condition, the defined elastic body spring element, and the characteristic of the fixed machine are utilized here.
A simulated response can be calculated on the basis of the motor model 11, the detection unit model 12, the controller model 14, and the mechanism condition in FIG. 37.

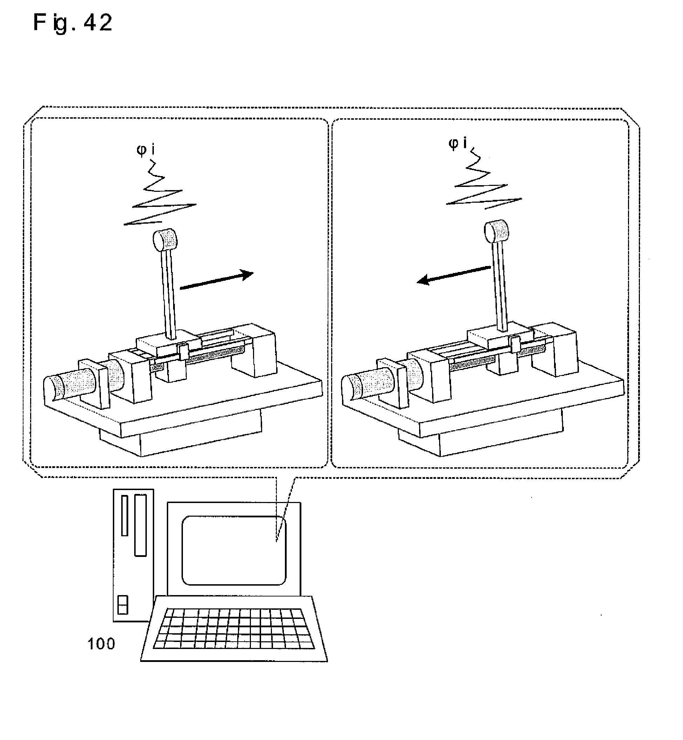

FIG. 42 is a view of simulations of the motor control device according to the ninth embodiment of the present invention. Since the mechanism condition is obtained in a three-dimensional shape in the present embodiment, animation displays of a motor control device can be performed on the screen (output unit8) of the computer 100 as shown in FIG. 42.
The φi at the load end can be displayed by a waveform as shown in FIG. 36 of the eighth embodiment besides the response simulation of a motor control device. Not only the load end φi, a response at an arbitrary point can be displayed as a waveform.
That is, because the response of a motor control device can be ascertained in advance also in consideration of the influence of a mechanical elastic spring element, if the performance of a motor and the functions of a controller and a command unit are insufficient, such as the insufficiency of the maximum speed and the maximum torque (thrust), or if a motor, a detection unit, a controller, and a command unit which have been selected by the examination of a response simulation have overspecifications, then the processing can also return to Step ST001 of inputting use conditions in FIG. 38 to perform a reselection, or the processing can return to Step ST031 of inputting a specification condition of a motor control device to change the selection and narrowing-down method of a motor control device and to enable the performance of a reselection.
If the processing proceeds to Step ST00B of examining an operation application, then an operation process of a motor control device can be imitated, by utilizing the command unit model 13 (FIG. 37) and by utilizing the motor model 11, the detection unit model 12, the controller model 14, and the mechanism condition, ascertaining a sequence program similarly to the seventh embodiment and performing the animation display of FIG. 42. Because the operation process can be imitated, checking input and output signals and the like, the debugging of a sequence program can be also performed.
If the performance of a motor and the functions of a controller and a command unit are insufficient as an application of the whole, such as the insufficiency of the maximum speed and the maximum torque (thrust) while imitating an operation process, or if the motor, the detection unit, the controller, the command unit which have been selected by the examination of an application have overspecifications, then the processing can also return to Step ST001 of inputting use conditions to perform a reselection. The processing can also return to Step ST031 of inputting a specification condition of a motor control device, and can change the selection and narrowing-down method of a motor control device to perform a reselection.

### [Embodiment 10]

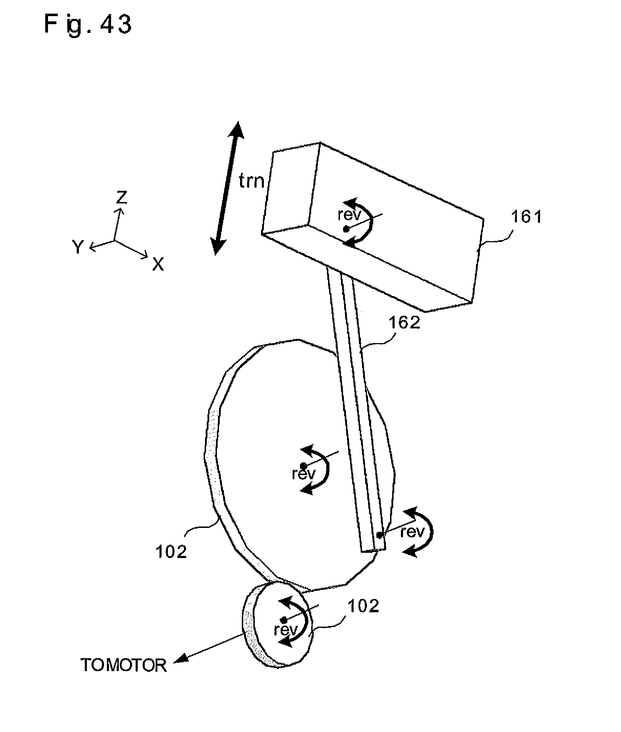

FIG. 43 is a view showing the configuration of a motor control device to be selected in a tenth embodiment of the present invention. In FIG. 43, 161 denotes a piston portion, and 162 denotes a crank portion. In the configuration of FIG. 43, the rotation motion of the gear 102 is changed to a translatory movement of the piston portion 161.
The schematic configuration of a motor control device selecting apparatus according to the tenth embodiment of the present invention is similar to that of FIG. 37 of the ninth embodiment, and the outline of a flow chart showing a motor control device selecting method according to the tenth embodiment of the present invention is also similar to that of FIG. 38 of the ninth embodiment.
The shape of the motor control device shown in FIG. 43 is captured as a three-dimensional CAD from the mechanism condition input unit 21 of FIG. 37 similarly to the eighth embodiment, and the formation of the correlation between parts is performed by the mechanism condition block input unit 33 (FIG. 37) similarly to the ninth embodiment.
If a fixed side machine is assumed to be a complete rigid body differently from the eighth embodiment and the ninth embodiment here, then the positions of four Rev's in FIG. 43 is correlated to the ground models 501 (fig. 35) by the rotation restriction model 505 (FIG. 41), and the position of at least one trn is correlated to the ground model 501 by the rectilinear propagation restriction model 506 (FIG. 41).
If the modelization of the shape is completed, the model of FIG. 43 can be stored as a subsystem model as shown in FIG. 3 of the first embodiment, although the storage is not listed in FIG. 38 of the ninth embodiment.

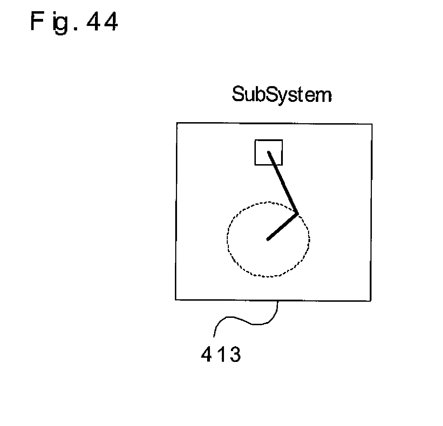

FIG. 44 is a diagram showing a subsystem model of the motor control device according to the tenth embodiment of the present invention. 413 denotes a piston & crank set subsystem model.
Similarly to the third embodiment, the fourth embodiment, and the seventh embodiment, the piston & crank set subsystem model 413 may be utilized again to input a mechanism condition.
After the completion of Step ST011 of inputting a mechanism condition in FIG. 38, as to the piston crank of the present embodiment, only the input of the drive pattern on either of the motor side and the load end side can be performed at Step ST021 of inputting a command condition if an operation characteristic is not grasped by the mechanism analysis operation unit 35 because the relation between the motor and the load end (piston portion 161) is not decided unlike FIG. 1 of the embodiment 1. If the operation characteristic is grasped by the mechanism analysis operation unit 35, then the input of a driving pattern similar to that of FIG. 1 of the embodiment 1 becomes possible. After the mechanism analysis operation, the processing may return to Step ST021 of inputting a command condition to ascertain a command on the not input side, or may ascertain the command at the aforesaid Step ST003 of outputting a selection result and the like.
Furthermore, the processing completes Step ST031 of inputting a specification condition of a motor control device to complete Step ST001 of inputting use conditions.
Moreover, the processing proceeds from Step STOOD of performing a mechanism analysis and Step ST002 of performing a selection operation of a motor control device to Step ST003 of outputting a selection result and the like similarly to the ninth embodiment, and a motor control device meeting use conditions can be selected.
Furthermore, the processing proceeds to Step ST00C of examining a control characteristic and Step ST00B of examining an operation application similarly to the ninth embodiment, and a motor control device can be selected while performing detailed evaluation.

### Industrial Applicability

Because a selection result of a motor control device, an input mechanism condition, and a command condition can be easily stored as electronic files of a computer, the data can be easily compared with an actual machine, and an object axis is not easily mistaken even if a plurality of motor control devices exist. The present invention can be applied to the use of being utilized in cooperation with a tool for supporting the setting and adjustment of an actual motor control device.
The selection of a motor control device can be also performed through a control simulation and an operation application simulation, and a minute evaluation examination can be performed. A design of an actual motor control device can be previously examined including the peripheral devices of a machine on the load side thereof, and the present invention can be also applied to the use of performing a front loading design for grasping a problem beforehand and coping with the problem.

## Claims

1. A motor control device selecting apparatus selecting a motor control device based on use conditions and a motor control device characteristic database, the motor control device including a motor driving a machine, a detection unit detecting an operation quantity of a detected body, which is either of the motor and the machine, a command unit generating a command signal, and a controller driving the motor based on the command signal, the motor control device forming a feedback loop so that the command signal and the operation quantity agree with each other, the motor control device selecting apparatus including: a selection operation unit performing a selection operation of the motor control device based on the use conditions and the motor control device characteristic database; an input unit inputting the use conditions; an output unit outputting a selection result of the motor control device and so forth; and a selection result storage unit storing the selection result, wherein the input unit includes a mechanism condition input unit inputting a power transmission element model, an external force model, and a mass load model as the use conditions, and a command condition input unit inputting a driving pattern of the motor as either of a load terminal and an operation pattern of the motor, the motor control device selecting apparatus **characterized in that**:
the mechanism condition input unit includes a mechanism condition block input unit disposing a plurality of models of elements serially or parallely and enabling input of mechanical use conditions, and
the motor control device selecting apparatus is further **characterized by** a subsystem storage unit capable of storing an arrangement of the elements as a subsystem model.

2. The motor control device selecting apparatus according to Claim 1, wherein the subsystem model can be reused as one of the power transmission element model, the external force model, and the mass load model, each being input into the mechanism condition input unit.

3. The motor control device selecting apparatus according to Claim 1, wherein the subsystem model can add one of motor models of a selected motor and a temporarily selected motor.

4. The motor control device selecting apparatus according to Claim 1, wherein the input unit further includes an external force pattern condition input unit inputting an external force pattern of the external force model as the use conditions.

5. The motor control device selecting apparatus according to Claim 1, wherein the input unit further includes a motor control device specification condition input unit inputting a specification condition of the selected motor control device.

6. The motor control device selecting apparatus according to Claim 1, wherein the mechanism condition input unit can input one of two-dimensional and three-dimensional positions and directions, and a gravitation direction.

7. The motor control device selecting apparatus according to Claim 1, wherein the mechanism condition input unit can input a machine drawing and a mechanical property.

8. The motor control device selecting apparatus according to Claim 7, further **characterized by** a mechanism analysis operation unit performing a mechanism analysis on a machine side based on the use conditions.

9. The motor control device selecting apparatus according to Claim 1 or 7, wherein the mechanism condition input unit can input a peculiar mechanical elastic characteristic.

10. The motor control device selecting apparatus according to Claim 1, wherein the mechanism condition input unit input a condition of a fixed machine which is not driven by the motor.

11. The motor control device selecting apparatus according to Claim 1, further **characterized by** a thermal analysis operation unit estimating a heat rise of the motor and a periphery thereof based on the use conditions.

12. The motor control device selecting apparatus according to Claim 1, further **characterized by** a motor model having a characteristic of the motor, a controller model having a characteristic of the controller, and a detection unit model having a characteristic of the detection unit.

13. The motor control device selecting apparatus according to Claim 1, further **characterized by** a command unit model having a characteristic of the command unit.

14. The motor control device selecting apparatus according to Claim 1, wherein either of the mechanism condition input unit and the mechanism condition block input unit inputs mechanism conditions pertaining to a plurality of motor control devices.

15. The motor control device selecting apparatus according to Claim 1, wherein the command condition input unit inputs driving patterns pertaining to a plurality of motor control devices.

16. The motor control device selecting apparatus according to Claim 1, further **characterized by** an option combination database pertaining to the motor control device, wherein the motor control device selecting apparatus selects an option combination.

17. A motor control device selecting method for selecting a motor control device based on use conditions and a motor control device characteristic database, the motor control device including a motor driving a machine, a detection unit detecting an operation quantity of a detected body, which is either of the motor and the machine, a command unit generating a command signal, and a controller driving the motor based on the command signal, the motor control device forming a feedback loop so that the command signal and the operation quantity agree with each other, the motor control device selecting method including the steps of:
inputting the use conditions; performing a selection operation of the motor control device based on the use conditions and the motor control device characteristic database; outputting a selection result of the motor control device and so forth; and recording the selection result, wherein the step of inputting the use conditions includes a step of inputting a mechanism condition of a power transmission element model, an external force model, and a mass load model as the use conditions, and a step of inputting a command condition using a driving pattern of the motor as either of a load terminal and an operation pattern of the motor, the motor control device selecting method **characterized in that**:
the step of inputting the mechanism condition includes a step of inputting mechanical use conditions by disposing a plurality of models of elements serially or parallely, and
the motor control device selecting method is further **characterized by** a step of storing an disposition of the elements as a subsystem model.

18. The motor control device selecting method according to Claim 17, wherein the step of inputting the mechanism condition includes a step capable of inputting one of the power transmission element model, the external force model, and the mass load model as the subsystem model.

19. The motor control device selecting method according to Claim 17, wherein the step of inputting the command condition further includes a step of inputting an external force pattern of the external force model.

20. The motor control device selecting method according to Claim 17, wherein the step of inputting the use conditions further includes a step of inputting a specification condition of the motor control device.

21. The motor control device selecting method according to Claim 17, wherein the step of inputting the mechanism condition further includes a step of inputting one of two-dimensional and three-dimensional positions and directions, and a gravitation direction.

22. The motor control device selecting method according to Claim 17, wherein the step of inputting the mechanism condition further includes a step of inputting a machine drawing and a mechanical property.

23. The motor control device selecting method according to Claim 22, further **characterized by** a step of performing a mechanism analysis on a machine side based on the use conditions.

24. The motor control device selecting method according to Claim 17 or 22, wherein the step of inputting the mechanism condition further includes a step of inputting a peculiar mechanical elastic characteristic.

25. The motor control device selecting method according to Claim 17, wherein the step of inputting the mechanism condition further includes a step of inputting a condition of a fixed machine which is not driven by the motor.

26. The motor control device selecting method according to Claim 17, further **characterized by** a step of estimating a heat rise of the motor and a periphery thereof based on the use conditions.

27. The motor control device selecting method according to Claim 17, further **characterized by** a step of examining a control characteristic using a motor model having a characteristic of the motor, a controller model having a characteristic of the controller, a detection unit model having a characteristic of the detection unit.

28. The motor control device selecting method according to Claim 17, further **characterized by** a step of examining an operation application using a command unit model having a characteristic of the command unit.

29. The motor control device selecting method according to Claim 17, further **characterized by** either a step of inputting mechanism conditions pertaining to a plurality of motor control devices included in the step of inputting the mechanism condition and a step of inputting driving patterns pertaining to a plurality of motor control devices included in the step of inputting the command condition.

30. The motor control device selecting method according to Claim 17, further **characterized by** a step of selecting an option combination pertaining to the motor control device.

31. A computer program **characterized by** realizing the motor control device selecting method according to any one of Claims 17-30.

32. A storage medium **characterized by** storing the computer program according to Claim 31.

## Amended claims

### Amended claims under Art. 19.1 PCT

**1.** A motor control device selecting apparatus selecting a motor control device based on use conditions and a motor control device characteristic database, the motor control device including a motor driving a machine, a detection unit detecting an operation quantity of a detected body, which is either of the motor and the machine, a command unit generating a command signal, and a controller driving the motor based on the command signal, the motor control device forming a feedback loop so that the command signal and the operation quantity agree with each other, the motor control device selecting apparatus including: a selection operation unit performing a selection operation of the motor control device based on the use conditions and the motor control device characteristic database; an input unit inputting the use conditions; an output unit outputting a selection result of the motor control device and so forth; and a selection result storage unit storing the selection result, wherein the input unit includes a mechanism condition input unit inputting a power transmission element model, an external force model, and a mass load model as the use conditions, and a command condition input unit inputting a driving pattern of the motor as either of a load terminal and an operation pattern of the motor, the motor control device selecting apparatus **characterized in that**:
the mechanism condition input unit includes a mechanism condition block input unit arranging a plurality of models of elements serially or parallely and enabling input of mechanical use conditions, and
the motor control device selecting apparatus is further **characterized by** a subsystem storage unit capable of storing an arrangement of the elements as a subsystem model.

**2.** The motor control device selecting apparatus according to Claim 1, wherein the subsystem model can be reused as one of the power transmission element model, the external force model, and the mass load model, each being input into the mechanism condition input unit.

**3.** The motor control device selecting apparatus according to Claim 1, wherein the subsystem model can add one of motor models of a selected motor and a temporarily selected motor.

**4.** The motor control device selecting apparatus according to Claim 1, wherein the input unit further includes an external force pattern condition input unit inputting an external force pattern of the external force model as the use conditions.

**5.** The motor control device selecting apparatus according to Claim 1, wherein the input unit further includes a motor control device specification condition input unit inputting a specification condition of the selected motor control device.

**6.** The motor control device selecting apparatus according to Claim 1, wherein the mechanism condition input unit can input one of two-dimensional and three-dimensional positions and directions, and a gravitation direction.

**7.** The motor control device selecting apparatus according to Claim 1, wherein the mechanism condition input unit can input a machine drawing and a mechanical property.

**8.** The motor control device selecting apparatus according to Claim 7, further **characterized by** a mechanism analysis operation unit performing a mechanism analysis on a machine side based on the use conditions.

**9.** The motor control device selecting apparatus according to Claim 1 or 7, wherein the mechanism condition input unit can input a peculiar mechanical elastic characteristic.

**10.** The motor control device selecting apparatus according to Claim 1, wherein the mechanism condition input unit input a condition of a fixed machine which is not driven by the motor.

**11.** The motor control device selecting apparatus according to Claim 1, further **characterized by** a thermal analysis operation unit estimating a heat rise of the motor and a periphery thereof based on the use conditions.

**12.** The motor control device selecting apparatus according to Claim 1, further **characterized by** a motor model having a characteristic of the motor, a controller model having a characteristic of the controller, and a detection unit model having a characteristic of the detection unit.

**13.** The motor control device selecting apparatus according to Claim 1, further **characterized by** a command unit model having a characteristic of the command unit.

**14.** The motor control device selecting apparatus according to Claim 1, wherein either of the mechanism condition input unit and the mechanism condition block input unit inputs mechanism conditions pertaining to a plurality of motor control devices.

**15.** The motor control device selecting apparatus according to Claim 1, wherein the command condition input unit inputs driving patterns pertaining to a plurality of motor control devices.

**16.** The motor control device selecting apparatus according to Claim 1, further **characterized by** an option combination database pertaining to the motor control device, wherein the motor control device selecting apparatus selects an option combination.

**17.** A motor control device selecting method for selecting a motor control device based on use conditions and a motor control device characteristic database, the motor control device including a motor driving a machine, a detection unit detecting an operation quantity of a detected body, which is either of the motor and the machine, a command unit generating a command signal, and a controller driving the motor based on the command signal, the motor control device forming a feedback loop so that the command signal and the operation quantity agree with each other, the motor control device selecting method including the steps of:
inputting the use conditions; performing a selection operation of the motor control device based on the use conditions and the motor control device characteristic database; outputting a selection result of the motor control device and so forth; and recording the selection result, wherein the step of inputting the use conditions includes a step of inputting a mechanism condition of a power transmission element model, an external force model, and a mass load model as the use conditions, and a step of inputting a command condition using a driving pattern of the motor as either of a load terminal and an operation pattern of the motor, the motor control device selecting method **characterized in that**:
the step of inputting the mechanism condition includes a step of inputting mechanical use conditions by arranging a plurality of models of elements serially or parallely, and
the motor control device selecting method is further **characterized by** a step of storing an arrangement of the elements as a subsystem model.

**18.** The motor control device selecting method according to Claim 17, wherein the step of inputting the mechanism condition includes a step capable of inputting one of the power transmission element model, the external force model, and the mass load model as the subsystem model.

**19.** The motor control device selecting method according to Claim 17, wherein the step of inputting the command condition further includes a step of inputting an external force pattern of the external force model.

**20.** The motor control device selecting method according to Claim 17, wherein the step of inputting the use conditions further includes a step of inputting a specification condition of the motor control device.

**21.** The motor control device selecting method according to Claim 17, wherein the step of inputting the mechanism condition further includes a step of inputting one of two-dimensional and three-dimensional positions and directions, and a gravitation direction.

**22.** The motor control device selecting method according to Claim 17, wherein the step of inputting the mechanism condition further includes a step of inputting a machine drawing and a mechanical property.

**23.** The motor control device selecting method according to Claim 22, further **characterized by** a step of performing a mechanism analysis on a machine side based on the use conditions.

**24.** The motor control device selecting method according to Claim 17 or 22, wherein the step of inputting the mechanism condition further includes a step of inputting a peculiar mechanical elastic characteristic.

**25.** The motor control device selecting method according to Claim 17, wherein the step of inputting the mechanism condition further includes a step of inputting a condition of a fixed machine which is not driven by the motor.

**26.** The motor control device selecting method according to Claim 17, further **characterized by** a step of estimating a heat rise of the motor and a periphery thereof based on the use conditions.

**27.** The motor control device selecting method according to Claim 17, further **characterized by** a step of examining a control characteristic using a motor model having a characteristic of the motor, a controller model having a characteristic of the controller, a detection unit model having a characteristic of the detection unit.

**28.** The motor control device selecting method according to Claim 17, further **characterized by** a step of examining an operation application using a command unit model having a characteristic of the command unit.

**29.** The motor control device selecting method according to Claim 17, further **characterized by** either a step of inputting mechanism conditions pertaining to a plurality of motor control devices included in the step of inputting the mechanism condition and a step of inputting driving patterns pertaining to a plurality of motor control devices included in the step of inputting the command condition.

**30.** The motor control device selecting method according to Claim 17, further **characterized by** a step of selecting an option combination pertaining to the motor control device.

**31.** A computer program **characterized by** realizing the motor control device selecting method according to any one of Claims 17-30.

**32.** A storage medium **characterized by** storing the computer program according to Claim 31.
